# EUROPÄISCHE PATENTSCHRIFT

(11) **EP 2 697 096 B1**
(45) Veröffentlichungstag und Bekanntmachung des Hinweises auf die Patenterteilung: **08.01.2020**
(21) Anmeldenummer: 12717598.2
(22) Anmeldetag: 12.04.2012
(51) Int. Cl.: B60N 2/80

(54) **KOPFSTÜTZE MIT EINER AUTOREAKTIVEN GERÜSTSTRUKTUR**
HEAD RESTRAINT WITH AN AUTOREACTIVE FRAMEWORK STRUCTURE
APPUI-TÊTE COMPORTANT UNE STRUCTURE D'ARMATURE AUTORÉACTIVE

(30) Priorität: 13.04.2011 DE 102011016959
(43) Veröffentlichungstag der Anmeldung: 19.02.2014
(73) Patentinhaber: Sitech Sitztechnik GmbH, 38442 Wolfsburg (DE)
(72) Erfinder: BAUMGARTEN, Jens, 38102 Braunschweig (DE); BUCHENBERGER, Martin, 38176 Wendeburg (DE); DEVOLDER, Damien, 38126 Braunschweig (DE); BARKOW, Tomas, 38102 Braunschweig (DE); CORDES, Anne, 29392 Wesendorf (DE); FISCHER, Martin, 38442 Wolfsburg (DE); NITSCHE, Thomas, 38444 Wolfsburg (DE)
(74) Vertreter: Wöhltjen, Karsten
(86) Internationale Anmeldenummer: PCT/EP2012/001582
(87) Internationale Veröffentlichungsnummer: WO 2012/139756

(56) Entgegenhaltungen:
- EP-A1- 2 253 503
- DE-A1- 2 339 357
- DE-A1-102006 032 891
- US-A1- 2010 295 347

## Beschreibung

Die Erfindung betrifft eine Kopfstütze mit einer Grundstruktur, die zur Verstellung der Kopfstütze und zur Aufnahme eines Kopfes einer Person dient.

Stand der Technik ist die Druckschrift EP 2 253 503 A1, sie beschreibt einen Kindersitz mit energieabsorbierenden Polstern die an den Seitenwangen des Kindersitzes in Höhe des Kopfes angebracht sind. Das Polster enthält zwei luftgefüllte Taschen, die im Ausgangzustand mit Luft gefüllt sind und durch eine umlaufende Schutzhaltung fixiert werden. Werden Kräfte extern aufgebracht entweicht Luft durch in den Taschen vorgesehene Luftaustrittsöffnungen. Das Polster wird dadurch komprimiert und Energie absorbiert. Ähnliches beschreibt auch die Druckschrift US 2010/0295347. In dieser Schrift ist innerhalb des Polsters eine Konstruktion aus Innen- und Außenschale sowie eines Unterstützungsrahmens angeordnet. Im Falle einer äußeren Krafteinwirkung bewegen sich die Schalen aufeinander zu und verringern dadurch das Volumen der Luftkammer. Weiterhin offenbart die Druckschrift DE 10 2006 032891 A1 eine Kopfstütze mit einer Grundstruktur, die zur Verstellung der Kopfstütze und zur Aufnahme eines Kopfes (K) einer Person dient, wobei die Grundstruktur eine Haltestruktur und eine Struktur umfasst, wobei die Struktur zur Ausbildung von Seitenflügeln dient, die an einem Halteelement der Haltestruktur angeordnet sind, wobei die Seitenflügel aus einer Ausgangsposition in Fahrtrichtung (+x-Richtung) autoreaktiv in eine Komfortposition und zurück bringbar sind.

Aus dem Stand der Technik sind ferner "funktionsintegrierte, bionische Fahrzeugsitze" bekannt. Die Besonderheit dieser Fahrzeugsitze steckt in der Ausgestaltung der Rückenlehne, die sich das Flossenstrahl-Prinzip, das so genannte "Finray-Prinzip", zu Nutze macht. Die Anwendung dieses Prinzips und der grundsätzliche Aufbau, der so genannte Finray-Aufbau, wurde bereits in der EP 1 040 999 A2 für die Konstruktion von Bauteilen, wie Sitzlehnen und Sitzflächen, beschrieben.

Das Finray-Prinzip kann bei Fischen beobachtet werden. Es beruht auf der besonderen Struktur der Fischflossen von Fischen. Das Prinzip bewirkt, dass sich die Fischflosse bei Druckeinwirkung auf einen Punkt entgegen dieser Druckrichtung bewegt. Die Fischflosse reagiert auf den Druck mit Gegendruck. Möglich wird das durch den speziellen Aufbau der Fischflosse mit zwei flexiblen Streben, die an einer Spitze zusammenlaufen und dort fest miteinander verwachsen sind. Zwischen den zwei elastischen Flanken befinden sich Querstreben, die die Flanken auf Abstand halten und elastische Bewegungen zulassen. Hält man die Schwanzflosse an der Basis fest und drückt mit einem Finger auf die Mitte des Flossenblattes, bewegt sich die Flossenspitze wider Erwarten entgegen der Druckrichtung des Fingers.

Technisch wurde dieses Wirkprinzip in einer Rückenlehnenstruktur eines Fahrzeugsitzes auf folgende Weise realisiert: Zwei flexible Flanken aus thermoplastischem GlasfaserVerbundwerkstoff (einem so genannten Organoblech) bilden die Vorder- und Rückseite der Rückenlehne. Diese sind unten an der Rückenlehnenbasis befestigt, laufen nach oben hin spitz zusammen, wo ihre Enden miteinander verbunden sind. An den Flanken gelenkig angebundene Streben verbinden Vorder- und Rückseite miteinander und halten diese auf Abstand. Eine solche Rückenlehne stützt auch im Lendenwirbelbereich, gibt im Schulterbereich am meisten nach hinten nach und reduziert dabei gleichzeitig den Abstand eines Kopfpolsters einer Kopfstütze zum Kopf eines Aufsitzenden. Bei großen Auslenkungen, wie sie zum Beispiel auch bei einem Heckaufprall auftreten können, kann so einem Schleudertrauma mit Hilfe einer solchen Rückenlehnenstruktur wirkungsvoll entgegen gewirkt werden. Somit ist mit einer solchen Rückenlehnenstruktur einer Rückenlehne ein Anti-Whiplash-Effekt im Bereich des Kopfes erzielbar.

Ein Fahrzeugsitz, der sich das Finray-Prinzip zu Nutze macht, wird in der Druckschrift DE 10 2005 054 125 B3 beschrieben. Der Rückenlehnenrahmen des Fahrzeugsitzes umfasst rahmenartig eine auf dem Finray-Prinzip aufgebaute Konstruktion aus starrer Rückwand, flexibel ausgebildeter, plattenartiger Vorderwand und dazwischen angeordneten Querstreben. Die Querstreben erstrecken sich in ihrer Längsrichtung entlang der Fahrzeugsitzbreitenrichtung. Die Vorderwand und die Rückwand hingegen weisen eine Längsausdehnung in Fahrzeug-Höhenrichtung auf. Die Druckschrift stellt eine Rückenlehne eines Fahrzeugsitzes zur Verfügung, die unter Ausnutzung des Finray-Prinzips sowohl im Lendenwirbel- als auch im Schulterbereich in gegenseitiger Abhängigkeit voneinander auf einfache Weise verformt werden kann.

Ausgehend von den bekannten Anwendungsfällen liegt der Erfindung die Aufgabe zu Grunde, das Finray-Prinzip auch für andere Bauteile anzuwenden.

Bisher wurde im Automobilbereich nur daran gedacht, eine Rückenlehne auszubilden, deren Oberteil in einem Crashfall als Kopfstütze wirkt. Das Oberteil der Rückenlehne bewegt sich im Crashfall nach vorne und verhindert so, dass der Kopf nach hinten fällt und die Halswirbelsäule überstreckt wird. Damit wird wie oben erwähnt im Crashfall für den Kopf eines Insassen eines Fahrzeuges der so genannte Anti-Whiplash-Effekt erreicht.

Ausgangspunkt für die vorliegende Erfindung ist eine einzelne Kopfstütze mit einer Grundstruktur, die zur Verstellung der Kopfstütze und zur Aufnahme eines Kopfes einer Person dient, wobei die Grundstruktur eine Haltestruktur und mindestens eine Gerüststruktur umfasst, wobei die Gerüststruktur biegeelastische Flanken und zwischen den Flanken liegende auslenkbare Querstreben aufweist, die über elastische Verbindungsmittel an den Flanken angeordnet sind, wodurch ein über eine biegeelastische Flanke auf die Querstreben der mindestens einen Gerüststruktur wirkender Kraftimpuls, der aus einer Richtung auf eine Vorderseite der mindestens einen Gerüststruktur wirkt, eine ausgleichende autoreaktive Verformung der mindestens einen Gerüststruktur an einer anderen Stelle in entgegengesetzter Richtung bewirkt.

Erfindungsgemäß ist vorgesehen, dass die mindestens eine Gerüststruktur zur Ausbildung von Seitenflügeln dient, die an einem Halteelement der Haltestruktur angeordnet sind, wobei die Seitenflügel aus einer Ausgangsposition in Fahrtrichtung autoreaktiv in eine Komfortposition und zurück bringbar sind.

Erfindungsgemäß ist vorgesehen, für die Kopfstütze das in der Einleitung beschriebene Finray-Prinzip anzuwenden.

Die erfindungsgemäße Kopfstütze mit einem Finray-Aufbau und der Wirkungsweise nach dem Finray-Prinzip soll nicht nur in Personenkraftwagen Verwendung finden, sondern es wird auch eine Verwendung in allen Fahrzeugen, beispielsweise auch Flugzeugen, Bussen, Bahnen und Schiffen oder dergleichen vorgeschlagen.

Die Kopfstütze erhält erfindungsgemäß einen Finray-Aufbau oder anders gesagt, die intelligente autoreaktive Struktur, die unter Ausnutzung bionischer Ansätze funktioniert beziehungsweise reagiert, wie nachfolgend erläutert wird.

Erfindungsgemäß wird für die Grundstruktur der Kopfstütze eine Haltestruktur und die autoreaktive Struktur in der Art des Finray-Aufbaus vorgeschlagen, wobei die autoreaktive Struktur eine Funktion aufweist, die nach dem erläuterten Finray-Prinzip arbeitet.

Es ist vorgesehen, dass die Grundstruktur die Haltestruktur und die mindestens eine autoreaktive gerüstartige Struktur - nachfolgend nur Gerüststruktur genannt - umfasst, wobei die Gerüststruktur biegeelastische Flanken und zwischen den Flanken liegende auslenkbare Querstreben aufweist, die über elastische Verbindungsmittel an den Flanken angeordnet sind, wodurch ein über eine biegeelastische Flanke auf die Querstreben der mindestens einen Gerüststruktur wirkender Kraftimpuls, der aus einer Richtung auf eine Vorderseite der Gerüststruktur wirkt, eine ausgleichende autoreaktive Verformung der mindestens einen Gerüststruktur an einer anderen Stelle in entgegengesetzter Richtung bewirkt.

In bevorzugter Ausgestaltung der Erfindung erzeugt die in eine Richtung wirkende Kraft den Kraftimpuls, der über einen Kopf einer Person unter Ausbildung eines Auftreffpunktes des Kopfes oder einer Auftrefffläche des Kopfes auf die Vorderseite der Gerüststruktur übertragen wird. Es wird eine Verstellung der Kopfstütze an einer anderen Stelle - in einer Horizontalen quer zur Richtung der wirkenden Kraft - zumindest einseitig seitlich des Auftreffpunktes beziehungsweise der Auftrefffläche des Kraftimpulses in entgegengesetzter Richtung bewirkt.

Die Gerüststruktur bildet durch autoreaktive Verstellung seitlich des Auftreffpunktes beziehungsweise der Auftrefffläche des Kraftimpulses sich in entgegengesetzter Richtung des Kraftimpulses die Seitenflügel aus.

Gegenüber dem Stand der Technik wird insbesondere eine veränderte Ausrichtung der Gerüststruktur vorgesehen. In bevorzugter Ausgestaltung der Erfindung sind die biegeelastischen Flanken der mindestens einen Gerüststruktur in der Kopfstütze in Querrichtung in der Horizontalen quer zur Richtung der den Kraftimpuls bewirkenden Kraft angeordnet. In weiterer bevorzugter Ausgestaltung der Erfindung sind die Querstreben der mindestens einen Gerüststruktur in der Kopfstütze im Wesentlichen in Hochrichtung in der Vertikalen quer zur Richtung der den Kraftimpuls bewirkenden Kraft angeordnet.

In weiterer bevorzugter Ausgestaltung der Erfindung ist die zweite biegeelastische Flanke der mindestens einen Gerüststruktur zumindest teilweise mit der Haltestruktur verbunden.

Ferner ist vorgesehen zur Erzeugung unterschiedlicher, gewünschter Verformungen der Gerüststruktur, dass die Gerüststrukturen eine dreieckige oder eine rechteckige Form aufweisen, wobei mehrere Gerüststrukturen der gleichen Form oder unterschiedlicher Formen zu einer Mehrfach-Gerüststruktur zusammensetzbar sind.

Schließlich wird in bevorzugter Ausgestaltung der Erfindung vorgeschlagen, dass die Kopfstütze die mit der Haltestruktur verbundene mindestens eine Gerüststruktur der Kopfstütze über mit der Haltestruktur verbundene Haltestangen als Einzel-Kopfstütze auf einer Rückenlehne angeordnet ist oder die mindestens eine Gerüststruktur der Kopfstütze in eine Struktur einer Rückenlehne integriert ist.

Gemäß der Erfindung werden als autoreaktive Gerüststruktur separate "Komfort-Seitenflügel", die an der Haltestruktur befestigt sind, ausgebildet.

Es wird vorgesehen, dass die mindestens eine Gerüststruktur zur Ausbildung der Seitenflügel dient, die an dem Halteelement der Haltestruktur angeordnet sind, wobei die Seitenflügel aus einer Ausgangsposition in Fahrtrichtung autoreaktiv in eine Komfortposition und zurück bringbar sind.

Auf der Gerüststruktur ist ein Polsterelement angeordnet, welches ein mit einem Bezug versehenes Schaumteil ist.

Es ist zudem vorgesehen, dass die Gerüststruktur der Seitenflügel und das Polsterelement als separates von der Kopfstütze trennbares Finray-Polsterelement ausgebildet ist.

Ferner ist vorgesehen, dass zwischen der Gerüststruktur und dem Polsterelement eine Gleitebene ausgebildet ist, wobei die Gleitebene zwischen einer Rückseite des Polsterelementes und einer Vorderseite der Gerüststruktur der Seitenflügel angeordnet ist, in der die einander zugewandten, aneinander liegenden Flächen der Rückseite des Polsterelementes und der Vorderseite der Gerüststruktur eine Reibpaarung mit einem geringen Reibungskoeffizienten bilden.

In bevorzugter Ausgestaltung der Erfindung ist das Schaumteil die Kopfstütze aus einem Mittelschaumteil und je Seitenflügel einem Rand-Schaumteil und/oder ein Eck-Schaumteil ausgebildet. In einer bevorzugten Ausgestaltungsvariante sind das Mittel-Schaumteil aus einem weicheren Schaum und das Rand-Schaumteil und/oder das Eck-Schaumteil gegenüber dem Mittel-Schaumteil aus dem weicheren Schaum aus einem härteren Schaum ausgebildet. In einer weiteren bevorzugten Ausgestaltungsvariante ist das Mittel-Schaumteil aus einem weicheren viskoelastischen Schaum und das Rand-Schaumteil und/oder das Eck-Schaumteil gegenüber dem weicheren viskoelastischen Schaum des Mittel-Schaumteiles aus einem härteren viskoelastischen Schaum ausgebildet. Die zugehörigen vorteilhaften Effekte werden in der Beschreibung erläutert.

Bevorzugt weist die Haltestruktur zur Aufnahme der Gerüststruktur der Seitenflügel eine wannenartige Ausformung auf.

Ferner ist vorgesehen, dass die zwischen den biegeelastischen Flanken liegenden auslenkbaren Querstreben nahe der biegeelastischen Flanken Scharnierstellen beziehungsweise Gelenkstellen ausbilden, deren Elastizität in vorteilhafter Weise durch eine vorgenommene Materialschwächung beeinflusst wird.

Zur weiteren Komforterhöhung wird in einer Ausgestaltung vorgeschlagen, dass die Gerüststruktur der Seitenflügel in ihrer Ausgangsposition eine "V-Stellung" einnimmt, bei der die Seitenflügel im unteren Bereich aus einer Ebene in der normalen Einbaulage in Fahrtrichtung nach vorne zum Kopf eines Aufsitzenden "schüsselartig" heraustreten.

Die Gerüststruktur der Seitenflügel bildet in einer anderen Ausgestaltung in ihrer Ausgangsposition eine Anlagefläche für den Kopf in der "V-Stellung", indem die Seitenflügel die Gerüststruktur in ihrer Ausgangsposition in einer Ebene liegen, jedoch zumindest im unteren Bereich der Seitenflügel auf der Gerüststruktur mindestens ein Schaumteil angeordnet ist, das nach vorne zum Kopf eines Aufsitzenden "schüsselartig" heraustritt.

In einer bevorzugten Ausgestaltung der Kopfstütze wird für die Schüsselung gesorgt, indem auf der Gerüststruktur je Seitenflügel mindestens ein Eck-Schaumteil angeordnet ist, wodurch in der Ausgangsposition der Kopfstütze, bei der die Seitenflügel in einer Ebene liegen, eine Schüsselung der Anlagefläche des Kopfes bewirkbar ist.

Als vorteilhaft hat sich ferner eine Ausgestaltung der Gerüststruktur erwiesen, die sich dadurch auszeichnet, dass ausgehend von einer axialsymmetrischen Mittelachse der Kopfstütze beziehungsweise der Seitenflügel ein Abstand und/oder eine Länge der zwischen den biegeelastischen Flanken im normalen Einbauzustand der Kopfstütze vertikal ausgerichteten Querstreben von innen nach außen abnimmt.

Zur Verbesserung der Stabilität der Gerüststruktur wird vorgeschlagen, dass ein Bodenbereich der Gerüststruktur der Seitenflügel verstärkt ausgeführt ist und/oder eine Aussteifung aufweist.

Außerdem weisen erfindungsgemäß die als Gerüststruktur ausgebildeten Seitenflügel auf der Vorderseite der Gerüststruktur eine im Bereich der Mittelachse liegende Öffnung auf, in der ein von der Vorderseite zugängliches Dämpfungselement angeordnet ist, welches ein Schaumteil, insbesondere in der Art eines Druckpilzes, ist, wobei insbesondere ein viskoelastischer Schaum verwendet wird.

Der vorteilhafte Effekt, der durch die Verwendung von viskoelastischem Schaum zu verzeichnen ist, wird im nachfolgenden Ausführungsbeispiel näher erläutert.

Außerdem wird vorgeschlagen, dass die Gerüststruktur der Seitenflügel Verstärkungselemente aufweist, die einen Verstellweg der Seitenflügel von der Ausgangsposition in die Komfortposition und zurück vergrößern, worauf im zugehörigen Ausführungsbeispiel ebenfalls noch näher eingegangen wird.

Schließlich ist die Kopfstütze in einer möglichen Ausgestaltungsvariante auf einer Kopfstützen-Schwenkachse gegenüber einer Rückenlehne schwenkbar angeordnet, wobei die Position der Kopfstütze gegenüber der Rückenlehne und damit die Lage der Gerüststruktur in Abhängigkeit der Rückenlehnenneigung manuell oder automatisch in eine optimalere Position nachsteuerbar ist.

In einer anderen möglichen Ausgestaltungsvariante ist die Gerüststruktur gegenüber dem Halteelement auf einer Gerüststruktur-Schwenkachse schwenkbar angeordnet, wobei die Position der Gerüststruktur gegenüber dem Halteelement und somit gegenüber der Rückenlehne in Abhängigkeit der Rückenlehnenneigung manuell oder automatisch in eine optimalere Position nachsteuerbar ist.

Weitere bevorzugte Ausgestaltungen der Erfindung ergeben sich aus den übrigen, in den Unteransprüchen genannten Merkmalen.

Die Erfindung wird nachfolgend anhand der zugehörigen Zeichnungen näher erläutert. Es zeigen:
- Figur 1A: eine schematische Darstellung einer Verformung einer dreieckigen autoreaktiven Gerüststruktur bei Einwirkung einer Kraft;
- Figur 1B: schematische Darstellungen verschiedener Ausführungsvarianten dreieckiger autoreaktiver Gerüststrukturen;
- Figur 1C: eine Darstellung des Verformungsverhaltens der in Figur 1B schematisch dargestellten autoreaktiven Gerüststrukturen;
- Figur 2A: eine schematische Darstellung einer Verformung einer rechteckigen autoreaktiven Gerüststruktur bei Einwirkung einer Kraft;
- Figur 2B: schematische Darstellungen verschiedener Ausführungsvarianten rechteckiger autoreaktiver Gerüststrukturen;
- Figur 2C: eine Darstellung des Verformungsverhaltens der in Figur 2B schematisch dargestellten autoreaktiven Gerüststrukturen;
- Figur 3A: eine schematische Darstellung einer Verformung einer verschiedene Formen kombinierenden autoreaktiven Gerüststruktur bei Einwirkung einer Kraft;
- Figur 3B: schematische Darstellungen verschiedener Ausführungsvarianten mit spezifisch ausgebildeten und kombinierten autoreaktiven Gerüststrukturen;
- Figur 3C: eine Darstellung des Verformungsverhaltens der in Figur 3B schematisch dargestellten autoreaktiven Gerüststrukturen;
- Figuren 4A, 4B, 4C, 4D: beispielhafte schematische Darstellungen einiger Ausgestaltungen einer Grundstruktur einer Kopfstütze;
- Figuren 5A, 5B, 5C: eine durch einen Kraftimpuls durch den Kopf eines Fahrzeugsitzbenutzers selbstständig aktivierbare Schlummer-Kopfstütze mit einer eine autoreaktive Gerüststruktur aufweisenden Grundstruktur;
- Figuren 6A, 6B, 6C: eine durch einen Kraftimpuls durch den Kopf eines Fahrzeugsitzbenutzers aktivierte crashaktive Kopfstütze mit der die autoreaktive Gerüststruktur aufweisenden Grundstruktur;
- Figur 7A: einen Schnitt durch die Grundstruktur durch eine Kopfstütze nach dem Stand der Technik;
- Figur 7B: einen Schnitt durch eine Kopfstütze mit einer autoreaktiven Gerüststruktur;
- Figuren 8A, 8B: Schnittdarstellungen einer Kopfstütze mit einer autoreaktiven Gerüststruktur zur Verdeutlichung eines Kopfkastens und einer Gleitebene zwischen der autoreaktiven Gerüststruktur und einem Polsterelement;
- Figuren 9A, 9B: autoreaktive Gerüststrukturen als Seitenflügel der Kopfstütze zur Verdeutlichung eines scharnierartigen Aufbaus der Seitenflügel;
- Figur 10A: einen Schnitt durch eine Kopfstütze im Bereich der als Seitenflügel ausgebildeten autoreaktiven Gerüststruktur/en zur Verdeutlichung einer ersten und zweiten Vorgehensweise zur Ausgestaltung einer V-Stellung des Anlagebereiches der Kopfstütze;
- Figur 10B: perspektivische Darstellungen von Kopfstützen mit als Seitenflügel ausgebildeten autoreaktiven Gerüststruktur/en zur Verdeutlichung einer dritten Vorgehensweise in zwei Varianten zur Ausgestaltung einer V-Stellung des Anlagebereiches der Kopfstütze;
- Figur 11: einen Schnitt durch eine Kopfstütze im Bereich der als Seitenflügel ausgebildeten autoreaktiven Gerüststruktur/en zur Verdeutlichung der optimalen Anordnung der Querstreben innerhalb der autoreaktiven Gerüststruktur/en;
- Figur 12: einen Schnitt durch eine Kopfstütze im Bereich der als Seitenflügel ausgebildeten autoreaktiven Gerüststruktur/en zur Verdeutlichung einer bodenseitigen Aussteifung der autoreaktiven Gerüststruktur/en;
- Figur 13: Darstellungen der als Seitenflügel ausgebildeten autoreaktiven Gerüststruktur/en zur Verdeutlichung des Aufbaus der Kopfstütze mit Schaumteilen;
- Figuren 14A, 14B, 14C: einen Schnitt und Darstellungen der Kopfstütze, die Seitenflügel als autoreaktive Gerüststruktur umfasst, zur Verdeutlichung der Beeinflussung des Funktionsempfindens der Kopfstütze durch Verwendung von viskoelastischem Schaum;
- Figuren 15A bis 15E: perspektivische Außenansichten der Kopfstütze mit als autoreaktive Gerüststruktur ausgebildeten Seitenflügeln in einer ersten Produktgestaltungsvariante;
- Figuren 16A bis 16D: perspektivische Außenansichten der Kopfstütze der Kopfstütze mit als autoreaktive Gerüststruktur ausgebildeten Seitenflügeln in einer zweiten Produktgestaltungsvariante;
- Figuren 17, 18, 19: Verstärkungsstrukturen zur Wirkungsverstärkung der Verstellbewegung der als autoreaktive Gerüststruktur ausgebildeten Seitenflügel in mehreren verschiedenen Ausgestaltungsmöglichkeiten.

Die Erfindung wird nachfolgend erläutert. Für die Zwecke der vorliegenden Beschreibung soll mit "+x" ("plus x") die übliche Fahrtrichtung eines Fahrzeugs bezeichnet werden, mit "-x" ("minus x") die Richtung entgegen seiner üblichen Fahrtrichtung, mit "y" wird die Richtung in der Horizontalen quer zur x-Richtung bezeichnet, und mit "z" wird die Richtung in der Vertikalen quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem.

Wenn nachfolgend von einer "autoreaktiven" Struktur die Rede ist, so ist eine durch einen einwirkenden Kraftimpuls "auto"matisch ihre Form ändernde "reaktive" Gerüststruktur gemeint, die unter Ausnutzung bionischer Ansätze, dem vorne beschriebenen Finray-Prinzip, gehorcht.

Nachfolgend werden verschiedene Ausgestaltungen autoreaktiver Gerüststrukturen 120 zur Verwendung in einer Kopfstütze 100 beschrieben:

### Erste Ausgestaltung:

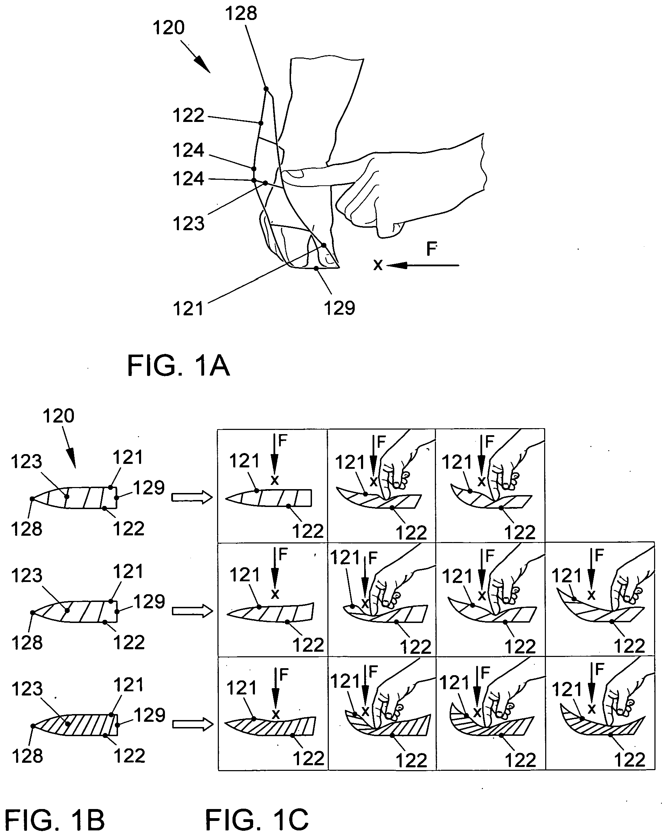

Figur 1A zeigt eine schematische Darstellung einer Verformung einer dreieckigen autoreaktiven Gerüststruktur 120 bei Einwirkung einer Kraft F. In der ersten Ausgestaltung ist die autoreaktive Gerüststruktur 120 - im Schnitt gesehen - dreieckig ausgebildet. Die Gerüststruktur 120 weist eine erste biegeelastische Flanke 121 und eine zweite biegeelastische Flanke 122 auf. Zwischen den biegeelastischen Flanken 121, 122 sind über elastische Verbindungsmittel 124 Querstreben 123 elastisch beweglich angeordnet. Die biegeelastischen Flanken 121, 122 und die Querstreben 123 können als flächige, plattenartige Gebilde ausgeführt sein. In der dreieckigen Ausgestaltung bildet die Gerüststruktur 120 an einem Ende eine Spitze 128 und am anderen Ende einen eine Basis bildenden Steg 129, der durch eine Querstrebe 123 gebildet wird, die zwischen den auf einer Seite auseinander laufenden Enden der biegeelastischen Flanken 121, 122 angeordnet ist.

Figur 1B zeigt schematische Schnittdarstellungen verschiedener Ausführungsvarianten der ersten Ausgestaltung, wobei sich die Ausführungsvarianten in der Ausrichtung der Querstreben 123 zwischen den biegeelastischen Flanken 121, 122 unterscheiden. Je nach Anzahl und Ausrichtung der Querstreben 123 zwischen den biegeelastische Flanken 121, 122 wird beim Einwirken einer punktuell oder flächig an der ersten biegeelastischen Flanke 121 angreifenden Kraft F, die einen Kraftimpuls auf die Gerüststruktur 120 ausübt, eine jeweils unterschiedliche Verformung der Gerüststruktur 120 bewirkt. Die Richtung der Verformung ist der Richtung des Kraftimpulses entgegengesetzt.

Anhand der Figuren 1A und 1C ist die Verformung der dreieckigen autoreaktiven Gerüststruktur 120 erkennbar. In Figur 1A ist die verformte Gerüststruktur 120 im Schnitt dargestellt, nachdem die Kraft F in x-Richtung auf die erste biegeelastische Flanke 121 eingewirkt hat. Die Ausgangsposition und Ausgestaltung der in Figur 1A dargestellten Gerüststruktur 120 entspricht der oberen Abbildung gemäß Figur 1B. Die in Figur 1A dargestellte Verformung ergibt sich, wenn die Gerüststruktur 120 im Bereich des Steges 129 ortsfest fixiert ist.

Anders verhält es sich, wie Figur 1C zeigt, wenn nicht der Steg 129, sondern die zweite biegeelastische Flanke 122 zumindest teilweise ortsfest fixiert ist. Das dann jeweils auftretende Verformungsverhalten ist in den Abbildungen der Figur 1C dargestellt, wobei jeder der horizontalen Folge von Abbildungen der Figur 1C der jeweils in Figur 1B links dargestellte Aufbau der Gerüststruktur 120 zugrunde liegt. Es ist sichtbar, dass sich das Verformungsverhalten der Gerüststrukturen 120 ändert. Je nachdem, wo die Kraft F an der Gerüststruktur 120 angreift, wird ein bestimmtes Verformungsverhalten der jeweiligen Gerüststruktur 120 erzeugt.

### Zweite Ausgestaltung:

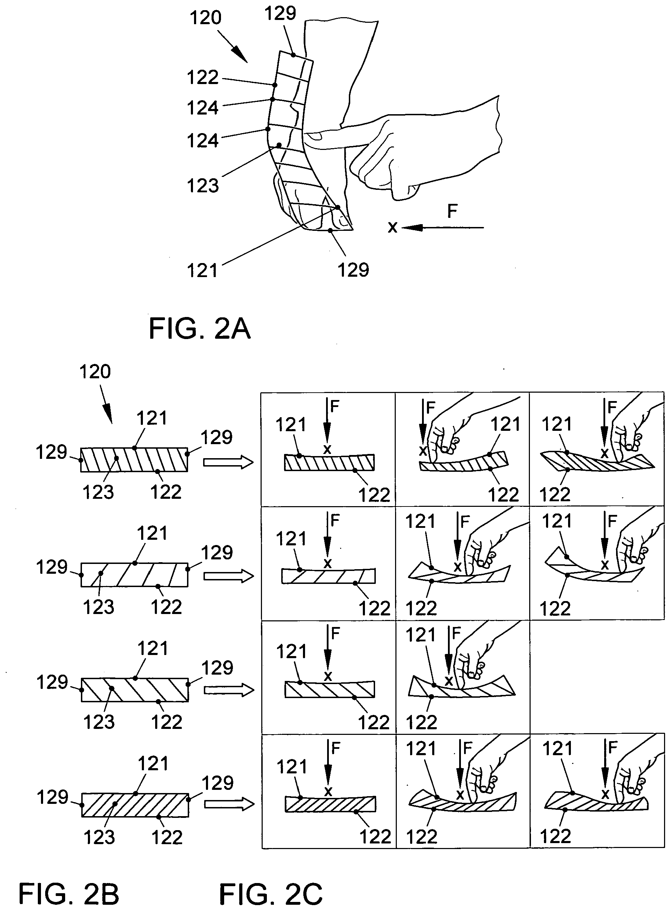

Figur 2A zeigt eine schematische Darstellung einer Verformung einer rechteckigen, insbesondere quaderförmigen Gerüststruktur 120 bei Einwirkung einer Kraft F. In der zweiten Ausgestaltung ist die autoreaktive Gerüststruktur 120 - im Schnitt gesehen - rechteckig ausgebildet. Die Gerüststruktur 120 weist wiederum eine erste biegeelastische Flanke 121 und eine zweite biegeelastische Flanke 122 auf, zwischen denen mittels elastischen Verbindungsmitteln 124 Querstreben 123 elastisch beweglich angeordnet sind. Die biegeelastischen Flanken 121, 122 können auch in der zweiten Ausgestaltung als flächige, plattenartige Gebilde ausgeführt werden. In der rechteckigen Ausgestaltung bildet die Gerüststruktur 120 an beiden Enden jeweils einen eine Basis bildenden Steg 129, der jeweils durch eine Querstrebe 123 gebildet wird. Die jeweilige Querstrebe 123 ist zwischen den auf beiden Seiten auseinander laufenden Enden der biegeelastischen Flanken 121, 122 angeordnet.

Figur 2B zeigt schematische Schnittdarstellungen verschiedener Ausführungsvarianten der ersten Ausgestaltung, wobei sich die Ausführungsvarianten in der Ausrichtung der Querstreben 123 zwischen den biegeelastischen Flanken 121, 122 unterscheiden. Je nach Anzahl und Ausrichtung der Querstreben 123 zwischen den biegeelastische Flanken 121, 122 wird beim Einwirken einer punktuell oder flächig an der ersten biegeelastischen Flanke 121 angreifenden Kraft F, die einen Kraftimpuls auf die Gerüststruktur 120 ausübt, eine jeweils unterschiedliche Verformung der Gerüststruktur 120 bewirkt. Die Richtung der Verformung ist der Richtung des Kraftimpulses entgegengesetzt.

Anhand der Figur 2A und 2C ist die Verformung einer rechteckigen autoreaktiven Gerüststruktur 120 erkennbar. In Figur 2A ist die verformte Gerüststruktur im Schnitt dargestellt, nachdem die Kraft F in x-Richtung auf die erste biegeelastische Flanke 121 eingewirkt hat. Die Ausgangsposition und Ausgestaltung der in Figur 2A dargestellten Gerüststruktur 120 entspricht der oberen Abbildung gemäß Figur 2B. Die in Figur 2A dargestellte Verformung ergibt sich, wenn die Gerüststruktur 120 im Bereich des unteren Steges 129 ortsfest fixiert ist.

Anders verhält es sich, wie Figur 2C zeigt, wenn nicht der Steg 129, sondern die zweite biegeelastische Flanke 122 zumindest teilweise ortsfest fixiert ist. Das dann jeweils auftretende Verformungsverhalten ist in den Abbildungen der Figur 2C dargestellt, wobei jeder der horizontalen Folge von Abbildungen der jeweils in Figur 2B links dargestellte Aufbau der Gerüststruktur 120 zu Grunde liegt. Es ist sichtbar, dass sich das Verformungsverhalten der Gerüststrukturen 120 ändert. Je nachdem, wo die Kraft F an der Gerüststruktur 120 angreift, wird ein bestimmtes Verformungsverhalten der jeweiligen Gerüststruktur 120 erzeugt.

### Weitere Ausgestaltungen:

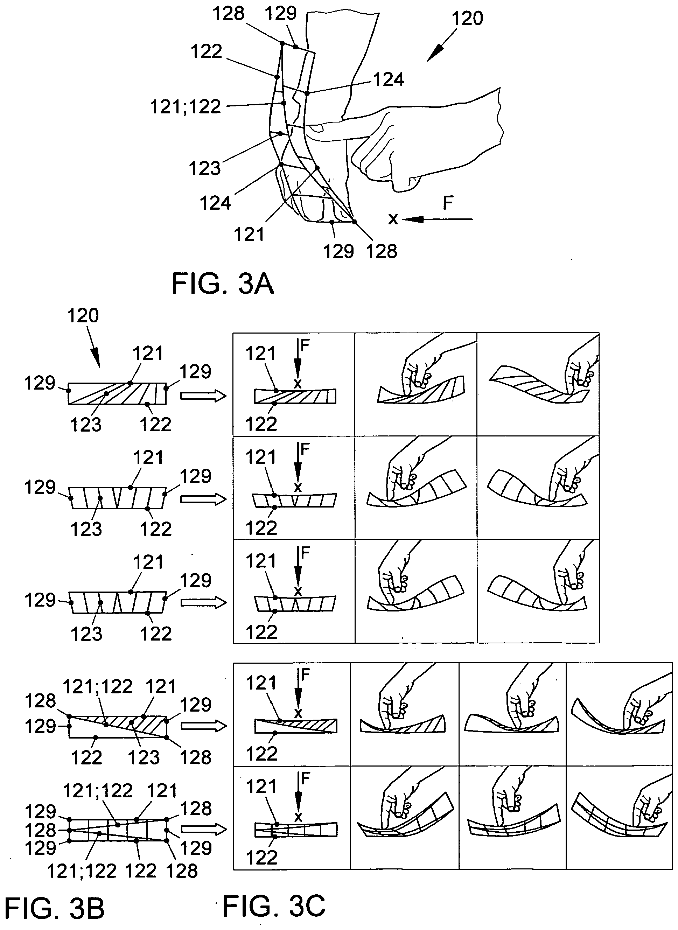

Figur 3A zeigt eine schematische Darstellung einer Verformung einer aus zwei dreieckigen autoreaktiven Gerüststrukturen 120 ausgebildeten Mehrfach-Gerüststruktur, bei Einwirkung einer Kraft F aus x-Richtung. Die aus zwei dreieckigen Gerüststrukturen 120 ausgebildete Mehrfach-Gerüststruktur wird auch als Doppel-Gerüststruktur oder "Doppel-Finray" bezeichnet. Die Doppel-Gerüststruktur zeigt - im Schnitt gesehen - zwei dreieckige Strukturen. Die Doppel-Gerüststruktur weist zur Ausbildung der ersten dreieckigen Gerüststruktur 120 eine erste biegeelastische Flanke 121 und eine zweite biegeelastische Flanke 122 auf, die zugleich die erste biegeelastische Flanke 121 für die nächste dreieckige Gerüststruktur 120 ist. Dieser ersten biegeelastischen Flanke 121 liegt eine zweite biegeelastische Flanke 122 der zweiten dreieckigen Gerüststruktur 120 gegenüber. Jede der beiden dreieckigen Gerüststrukturen 120 weist Querstreben 123 auf, die wiederum als flächige, plattenartige Gebilde ausgeführt sein können. In dieser Ausgestaltung bildet die Doppel-Gerüststruktur an beiden Enden eine Basis, die sowohl durch einen Steg 129 als auch durch eine Spitze 128 gekennzeichnet ist, die durch beide Gerüststrukturen 120 ausgebildet wird.

Anhand der Figur 3A ist die Verformung einer autoreaktiven Doppel-Gerüststruktur erkennbar. In Figur 3A ist die verformte Doppel-Gerüststruktur im Schnitt dargestellt, nachdem die Kraft F in x-Richtung auf die erste biegeelastische Flanke 121 eingewirkt hat. Die in Figur 3A dargestellte Verformung ergibt sich, wenn die Gerüststruktur 120 im Bereich der unteren Basis aus Spitze 128 und Steg 129 ortsfest fixiert ist.

Figur 3B zeigt weitere spezielle schematische Schnittdarstellungen weiterer Ausgestaltungen, wobei sich die drei oberen Ausgestaltungen in der Ausrichtung der Querstreben 123 zwischen den biegeelastischen Flanken 121, 122 unterscheiden. Diese drei oberen Ausgestaltungen sind keine Doppel-Gerüststrukturen. Je nach Anzahl und Ausrichtung der Querstreben 123 zwischen den biegeelastischen Flanken 121, 122 wird beim Einwirken einer punktuell oder flächig an der ersten biegeelastischen Flanke 121 angreifenden Kraft F, die einen Kraftimpuls auf die Gerüststruktur 120 ausübt, eine jeweils unterschiedliche Verformung der Gerüststruktur 120 bewirkt. Die Richtung der Verformung ist der Richtung des Kraftimpulses entgegengesetzt.

Die Besonderheit der Ausgestaltung der Gerüststruktur 120, die in Figur 3B ganz oben dargestellt ist, besteht darin, dass die Querstreben 123 schräg zwischen den biegeelastischen Flanken 121, 122 angeordnet sind. Ein geringer Teil der Gerüststruktur 120 ist sogar ohne Querstreben 123 ausgebildet.

Die Besonderheit der darunter liegenden Ausgestaltung der Gerüststruktur 120 besteht darin, dass die Querstreben 123 im zentralen Bereich der Gerüststruktur 120 ein <V> bilden.

Die Besonderheit der wiederum darunter liegenden Ausgestaltung der Gerüststruktur 120, die in Figur 3B als Drittes von oben dargestellt ist, besteht darin, dass die Querstreben 123 im zentralen Bereich der Gerüststruktur 120 ein auf dem Kopf stehendes <V> bilden.

Figur 3B zeigt weitere schematische Schnittdarstellungen weiterer Ausgestaltungen, wobei sich die beiden unteren Ausgestaltungen der Figur 3B von den drei oberen Ausgestaltungen dahingehend unterscheiden, dass es sich um Mehrfach-Gerüststrukturen handelt. Diese werden unter Benutzung der jeweils gleichen dreieckigen Form miteinander kombiniert. Es besteht erfindungsgemäß die Möglichkeit, Gerüststrukturen mit unterschiedlichen Formen miteinander zu kombinieren.

Bei der Ausgestaltung, die in Figur 3B als zweite von unten gesehen dargestellt ist, handelt es sich um eine Doppel-Gerüststruktur, wie sie bereits in Figur 3A gezeigt und zur Figur 3A beschrieben worden ist. Der Unterschied zu der Ausgestaltung gemäß Figur 3A besteht darin, dass bei einer der beiden dreieckigen Gerüststrukturen 120 vollständig auf die Anordnung von Querstreben 123 verzichtet worden ist.

Schließlich handelt es sich bei der in Figur 3B ganz unten dargestellten Ausgestaltung um eine Dreifach-Gerüststruktur. Die Dreifach-Gerüststruktur zeigt - im Schnitt gesehen - drei dreieckige Gerüststrukturen. Die Dreifach-Gerüststruktur weist zur Ausbildung der ersten dreieckigen Gerüststruktur 120 eine erste biegeelastische Flanke 121 und eine zweite biegeelastische Flanke 122 auf, der eine zweite biegeelastische Flanke 122 der zweiten dreieckigen Gerüststruktur 120 gegenüberliegt, die wiederum gleichzeitig die erste biegeelastische Flanke 121 der dritten Gerüststruktur 120 bildet, die über eine zweite biegeelastische Flanke 122 abgeschlossen ist. Jede der drei dreieckigen Gerüststrukturen 120 weist Querstreben 123 auf, die als flächige, plattenartige Gebilde ausgeführt sein können. An einem Ende wird die Basis der Dreifach-Gerüststruktur durch zwei Stege 129 und eine Spitze 128 gebildet, wobei das gegenüberliegende Ende ebenfalls eine Basis aus zwei Spitzen 128 und einem Steg 129 ausbildet. Es wird deutlich, dass auf diese Weise Mehrfach-Gerüststrukturen in einer beliebigen Anzahl von einzelnen Gerüststrukturen verschiedener Ausgestaltungen ausbildbar sind. Unterschiedliche Formen mehrerer Gerüststrukturen können zu einer Mehrfach-Gerüststruktur kombiniert werden.

Das jeweilige Verformungsverhalten der in den Schnittdarstellungen der Figur 3B von oben nach unten dargestellten Gerüststrukturen 120 ist in den Abbildungen der Figur 3C dargestellt, wobei jeder der horizontalen Folge von Abbildungen der jeweils in Figur 3B links dargestellte und zuvor beschriebene Aufbau der Gerüststruktur 120 zu Grunde liegt. Die in den Abbildungen der Figur 3C dargestellte Verformung der jeweiligen Gerüststruktur 120 ergibt sich, wenn die Gerüststruktur 120 mit ihrer zweiten biegeelastischen Flanke 122 zumindest teilweise ortsfest fixiert ist. Es ist auch hier sichtbar, dass sich das Verformungsverhalten der Gerüststrukturen 120 ändert. Je nachdem, wo die Kraft F an der Gerüststruktur 120 angreift, wird ein bestimmtes Verformungsverhalten der jeweiligen Gerüststruktur 120 erzeugt.

Nachfolgend werden verschiedene Ausführungsformen von Grundstrukturen 120 einer Kopfstütze 100 beschrieben, die mit zuvor beschriebenen Ausgestaltungen autoreaktiver Gerüststrukturen 120 ausgebildet sind. Diese Ausführungsformen sind nur beispielhaft. Es versteht sich, dass die zuvor beschriebenen und auch andere vielfältig ausbildbare Ausgestaltungen und Ausführungsvarianten und Kombinationen davon zur Ausbildung der Ausführungsformen von Grundstrukturen 120 einer Kopfstütze 100 zum Einsatz kommen können.

### Die nachfolgend beschriebenen Ausführungsformen haben Folgendes gemeinsam:

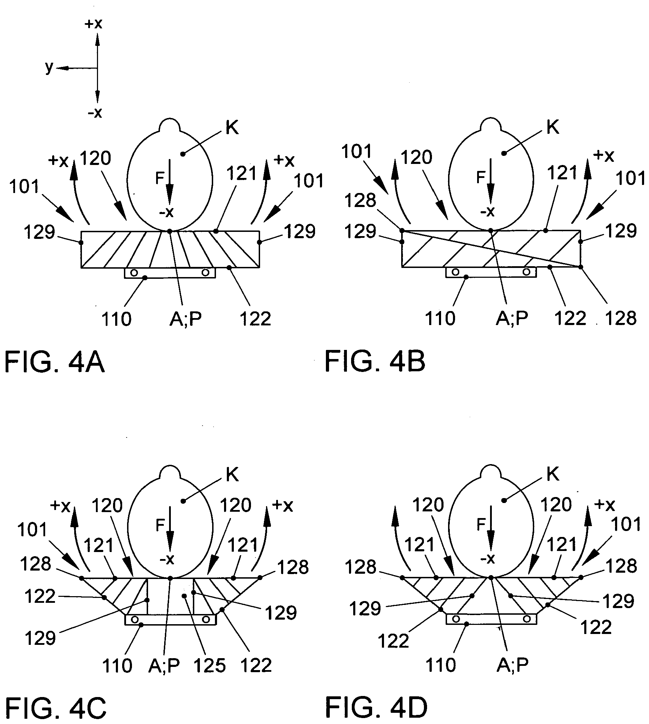

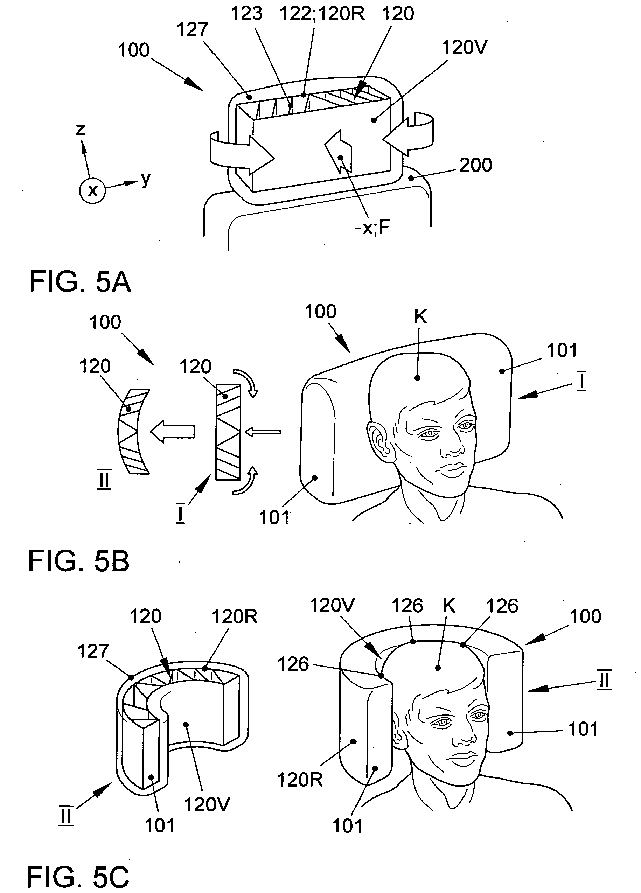

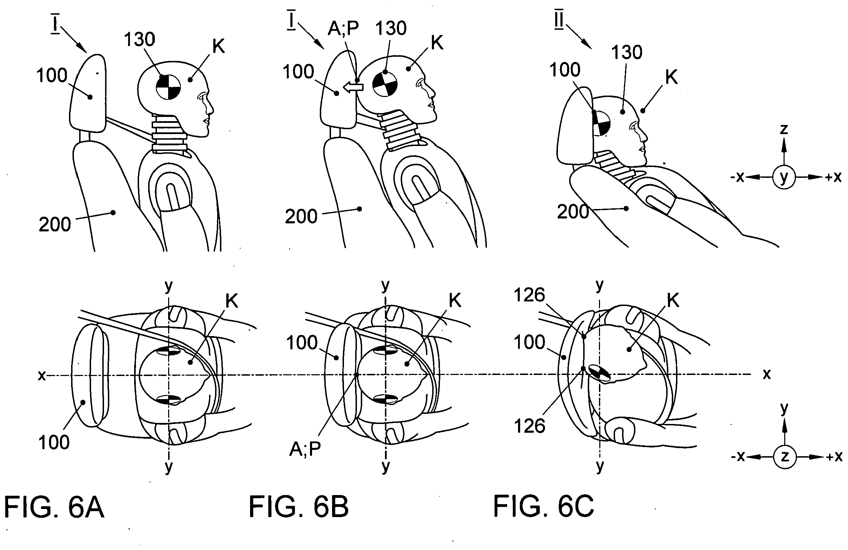

Wenn der Kopf K durch eine Kraft F in -x-Richtung einen Kraftimpuls auf die erste biegeelastische Flanke 121 ausübt, wird eine ausgleichende autoreaktive Verformung der Gerüststruktur 120 an einer anderen Stelle in entgegengesetzter Richtung in +x-Richtung bewirkt. Der Kraftimpuls kann punktuell in einem Auftreffpunkt P oder darüber hinaus im weiteren Verlauf der Kopfbewegung über eine Auftrefffläche A auf die Kopfstütze 100 übertragen werden. Die seitlichen Bereiche der Gerüststruktur 120 weichen unter Ausbildung einer Art Seitenflügel 101 im Wesentlichen in +x-Richtung aus, wie an den in den Figuren 4A bis 4D dargestellten Richtungspfeilen verdeutlicht wird. Durch den Kraftimpuls kann also eine Kopfstütze 100 aus einer Ausgangsposition I in eine Schlummer- oder Crashposition II (siehe die Figuren 5A bis 5C und Figuren 6A bis 6C) gebracht werden, wodurch eine Schlummer-Kopfstütze und oder eine crashaktive Kopfstütze ausbildbar ist.

### Erste Ausführungsform:

Die Figur 4A zeigt eine erste Ausführungsform. Die Kopfstütze 100 weist als Grundstruktur eine Haltestruktur 110 auf. An der Haltestruktur 110 ist eine Gerüststruktur 120 befestigt, wie sie in Figur 3B in der dritten Abbildung von oben dargestellt ist. Die Gerüststruktur 120 weist mittig das auf dem Kopf stehende <V> auf. In x-Richtung gesehen ist die Gerüststruktur 120 axialsymmetrisch ausgebildet. In der zugehörigen Abbildungsfolge in Figur 3C wird deutlich, welches Verformungsverhalten diese Gerüststruktur 120 aufweist. Die zweite biegeelastische Flanke 122 ist zumindest teilweise mit der Haltestruktur 110 verbunden, so dass die Gerüststruktur 120 an der Haltestruktur 110 ortsfest fixiert ist. Die erste Ausführungsform wird mittels der Figuren 5A bis 5C nachfolgend noch detaillierter beschrieben.

### Zweite Ausführungsform:

Die Figur 4B zeigt eine zweite Ausführungsform. Die Kopfstütze 100 weist wiederum als Grundstruktur eine Haltestruktur 110 auf. An der Haltestruktur 110 ist eine Doppel-Gerüststruktur 120 befestigt, wie sie in Figur 3A dargestellt und beschrieben worden ist. Im Unterschied zu Figur 3A ist die zweite biegeelastische Flanke 122 ortsfest an der Haltestruktur 110 fixiert.

### Dritte Ausführungsform:

Die Figur 4C zeigt eine dritte Ausführungsform. Die Kopfstütze 100 weist als Grundstruktur eine Haltestruktur 110 auf. In der Mitte der Kopfstütze 100 in x-Richtung gesehen ist axialsymmetrisch ein Polster, insbesondere ein Schaumteil 125 angeordnet. Das Schaumteil 125 grenzt jeweils an die Basis jeweils einer Gerüststruktur 120 (links und rechts in y-Richtung gesehen), die jeweils durch den Steg 129 ausgebildet ist. Vorzugsweise sind beide Gerüststrukturen 120 über ihre zweite biegeelastische Flanke 122 zumindest teilweise mit der Haltestruktur 110 ortsfest verbunden. Als Gerüststrukturen 120 werden bei dieser dritten Ausführungsform dreieckige Gerüststrukturen verwendet, wie sie in der oberen Abbildung gemäß Figur 1B dargestellt sind. Die Besonderheit dieser dritten Ausführungsform besteht darin, dass der Kraftimpuls über das Schaumteil 125 auf die dreieckigen Gerüststrukturen 120 übertragen wird. Der Vorteil besteht darin, dass der Kopf K der Person nicht direkt mit den Gerüststrukturen 120 in Kontakt kommt. Bei einer geringen Kraft F und somit einem geringen Kraftimpuls erfolgt die Übertragung über die Hinterseite des Kopfes K punktuell oder im weiteren Verlauf der Kopfbewegung über eine kleine Auftrefffläche A, so dass die Kraftübertragung stets über das Schaumteil 125 indirekt auf die Gerüststrukturen 120 erfolgt. Diese Kraftübertragung erfolgt, wenn die Person durch ihren Hinterkopf die Verstellung der Kopfstütze 100 als Schlummer-Kopfstütze vornimmt. Bei einer starken Kraft F und somit einem großen Kraftimpuls erfolgt die Übertragung über die Hinterseite des Kopfes K über eine große Auftrefffläche A, so dass die Übertragung indirekt über das Schaumteil 125 und direkt über die Gerüststrukturen 120 erfolgt, wodurch der Verstellvorgang beschleunigt erfolgt. Eine solche Kraftübertragung erfolgt, wenn in einem Crashfall der Hinterkopf der Person schlagartig auf die Kopfstütze 100 auftrifft. Diese Funktion ermöglicht die Ausbildung einer crashaktiven Kopfstütze 100, bei der in kurzer Zeit die sichere Aufnahme des Kopfes K der Person in der Kopfstütze 100 realisiert werden soll.

### Vierte Ausführungsform:

Die Figur 4D zeigt eine vierte Ausführungsform. Die Kopfstütze 100 weist als Grundstruktur wiederum die Haltestruktur 110 auf. An der Haltestruktur 110 ist eine Gerüststruktur 120 befestigt, wie sie bereits in Figur 4C dargestellt und in der oberen Abbildung gemäß Figur 1B gezeigt und beschrieben worden ist. Im Unterschied zur Figur 4C ist kein Schaumteil 125 angeordnet, sondern die beiden dreieckigen Gerüststrukturen 120 sind über die erste biegeelastische Flanke 121 miteinander verbunden. In der Mitte der Kopfstütze 100 in x-Richtung gesehen, ist axialsymmetrisch ein Freiraum ausgebildet, der zwischen der jeweiligen Basis der Gerüststrukturen 120 durch den jeweiligen Steg 129 der Gerüststrukturen 120 und der Haltestruktur 110 gebildet wird. Durch diese Maßnahme wird eine besonders flexible Doppel-Gerüststruktur gebildet, da im zentralen Bereich der Gerüststruktur keine Querstreben 123 angeordnet sind. Die Reaktion auf einen Kraftimpuls erfolgt, wie bei den Figuren 4A und 4B, umgehend, sobald der Hinterkopf punktuell oder im weiteren Verlauf der Kopfbewegung flächig auf die erste biegeelastische Flanke 121 der Gerüststruktur 120 auftrifft.

### Schlummer-Kopfstütze:

Die Figur 5A zeigt eine Kopfstütze 100 auf einer Rückenlehne 200. Zum Einsatz kommt beispielsweise eine Gerüststruktur 120, wie sie bereits in Figur 4A dargestellt und zur Figur 4A beschrieben worden ist. Eine Vorderseite 120V der Gerüststruktur 120 wird durch die plattenartige Ausbildung der ersten biegeelastischen Flanke 121 ausgebildet. Eine Rückseite 120R der Gerüststruktur 120 wird durch die plattenartige Ausbildung der zweiten biegeelastischen Flanke 122 ausgebildet. Die Querstreben 123 sind elastisch beweglich, ebenfalls als plattenartige Elemente, zwischen den plattenartig ausgebildeten biegeelastischen Flanken 121, 122 angeordnet. Die Querstreben 123 verlaufen in z-Richtung und die biegeelastischen Flanken 121, 122 verlaufen in y-Richtung. Die Gerüststruktur 120 ist an einer nicht dargestellten Haltestruktur 110 befestigt. Um die Gerüststruktur 120 herum kann wahlweise ein Bezug oder ein innen kaschierter Bezug 127 angeordnet werden. Es besteht auch die Möglichkeit, die Gerüststruktur 120 in einer Art Einleger innerhalb eines Schaumes einer Kopfstütze 120 vorzusehen. In einem solchen Fall ist dann der Schaum mit einem Bezug 127 versehen. In Figur 5A ist mit Hilfe der Pfeile die Reaktion der Gerüststruktur 120 verdeutlicht, wenn aus -x-Richtung eine Kraft F axialsymmetrisch auf die Gerüststruktur 120 auftrifft.

In Figur 5B ist der Kopf K einer Person dargestellt, wobei sich die mit einem Bezug 127 versehene Kopfstütze 100 in Ausgangsposition I befindet. Beim Auftreffen einer Kraft F erfolgt die Verformung gemäß den links in Figur 5B dargestellten schematischen Schnittzeichnungen in eine Schlummerposition II.

Die Figur 5C zeigt das Ergebnis. Der Kopf K der Person wird von der Vorderseite 120V der Gerüststruktur 120 umschlossen. Die Kopfstütze 100 bildet hintere und jeweils seitliche Anlageflächen 126 aus, an denen der Kopf K zur Anlage kommt, so dass der Kopf K sicher von der Kopfstütze 100 aufgenommen und in einer Schlummerposition gehalten wird. Die linke Abbildung der Figur 5C zeigt noch einmal die verformte Gerüststruktur 120 in der Schlummerposition II innerhalb eines Bezuges 127, jedoch ohne Haltestruktur 110.

### Crashaktive Kopfstütze:

Die obere und untere Abbildung der Figuren 6A bis 6C zeigen zusammengehörend jeweils eine Position des Oberkörpers und mithilfe des Messpunktes 130 die Position des Kopfes K einer Person, welche auf einem Fahrzeugsitz aufsitzt, wobei sich die Person vor einem Crashfall in den Abbildungen gemäß Figur 6A noch in einer aufrechten Normalposition befindet.

Gemäß Figur 6B wird die Person in einem Crashfall in -x-Richtung bewegt. Die Hinterseite des Kopfes K trifft punktuell über den Auftreffpunkt P auf die Vorderseite der Kopfstütze 100 und damit auf die Vorderseite 120V der Gerüststruktur 120, die in den Figuren nicht näher dargestellt ist, auf. In einem Crashfall wird die Übertragung der Kraft F dazu führen, dass sich im weiteren Verlauf der Kopfbewegung in kurzer Zeit zwischen der Hinterseite des Kopfes K und der Vorderseite 120V der Gerüststruktur 120 eine große Auftrefffläche A bildet, wodurch die Reaktion der Verformung der Gerüststruktur 120 in entgegengesetzter +x-Richtung beschleunigt erfolgt.

Die Wirkungsweise zeigt Figur 6C, wobei anhand der Abbildungen deutlich wird, dass der Kopf K von den sich seitlich in y-Richtung gesehen ausbildenden Seitenflügeln 101 der Kopfstütze 100 aufgenommen wird. Die Seitenflügel 101 sind in Crashposition II im Wesentlichen in x-Richtung ausgerichtet. Die Figur 6C macht durch die untere der beiden Abbildungen deutlich, dass die Seitenflügel 101, wenn der Kopf K nicht axialsymmetrisch in -x-Richtung auf die Kopfstütze 100 auftrifft, unterschiedlich reagieren. Kommt der Kopf K mehr seitlich in y-Richtung zur Anlage, so wird sich der Seitenflügel 101 auf dieser Seite entsprechend stärker in +x-Richtung verformen, so dass die seitliche Anlagefläche 126 einerseits schneller ausgebildet wird und andererseits stärker in +x-Richtung verschwenkt wird, als der sich auf der gegenüberliegenden Seite ausbildende Seitenflügel 101.

Diese Funktion der Ausbildung einer einseitig stärker ausgebildeten Anlagefläche 126 bei einem bezogen auf die x-Richtung asymmetrisch auf die Vorderseite 120V der Kopfstütze 120 wirkenden Kraftimpuls gilt auch für die zuvor in den Figuren 5A bis 5C beschriebene Schlummer-Kopfstütze. Eine asymmetrisch ausgerichtete, seitliche Belastung des Hinterkopfes auf die Schlummer-Kopfstütze führt dazu, dass die Seitenflügel 101 der Kopfstütze 100 auf der belasteten Seite weiter in +x-Richtung verschwenkt werden, als auf der gegenüberliegenden Seite.

Die beschriebenen möglichen Kopfstützen 100 weisen somit in vorteilhafter Weise Sicherheits- und Komfortfunktionen in der Ausbildung als crashaktive Kopfstützen beziehungsweise Schlummer-Kopfstützen auf.

Für die beschriebenen Kopfstützen 100 ist ein geringer technischer Aufwand nötig, da keine Aktorik, wie zum Beispiel mechanische oder pneumatische oder elektrische Ansteuerungen, notwendig sind. Im Vergleich zu anderen aktorischen Systemen zur Kopfstützenverstellung erfolgt bei diesen autoreaktiven Kopfstützen eine automatische Reaktion ohne zusätzliche Aktorik. Die autoreaktiven Kopfstützen sind einfach aufgebaut, preiswert und insbesondere sehr leicht, so dass in weiterer vorteilhafter Weise eine Gewichtsreduzierung der Kopfstütze 100 die Folge ist.

Durch die Sicherheitsfunktion ist ein Gewinn an Sicherheit bei geringem technischen Aufwand möglich, wobei in vorteilhafter Weise eine von der Person ausgehende, über den Kopf K auf die Kopfstütze K übertragbare automatische und lastabhängige autoreaktive Anpassung der Kopfstützenkontur erfolgt, die vorteilhaft zur Vermeidung des Whiplash-Effektes des Kopfes K einer Person genutzt werden kann.

Schließlich wird darauf hingewiesen, dass eine Kopfstütze 100 mit einer autoreaktiven Gerüststruktur 120 nicht nur als Einzel-Kopfstütze über Haltestangen 400 an einer Rückenlehne 200 angeordnet werden kann, sondern dass die Kopfstütze 100 auch in die Struktur einer Rückenlehne 200 integriert werden kann. Insofern ergibt sich dann eine Rückenlehne 200 mit einer Kopfstütze 100 mit einer autoreaktiven Gerüststruktur 120, wobei die Rückenlehne 200 selber mit einer autoreaktiven Gerüststruktur ausgebildet sein kann.

In den nachfolgenden Figuren werden weitere innovative Details zur Ausbildung von Kopfstützen 100 mit einer autoreaktiven Gerüststruktur beschrieben. Diese Details ergänzen das zuvor beschriebene Grundprinzip.

### Autoreaktive Betätigung der Kopfstütze:

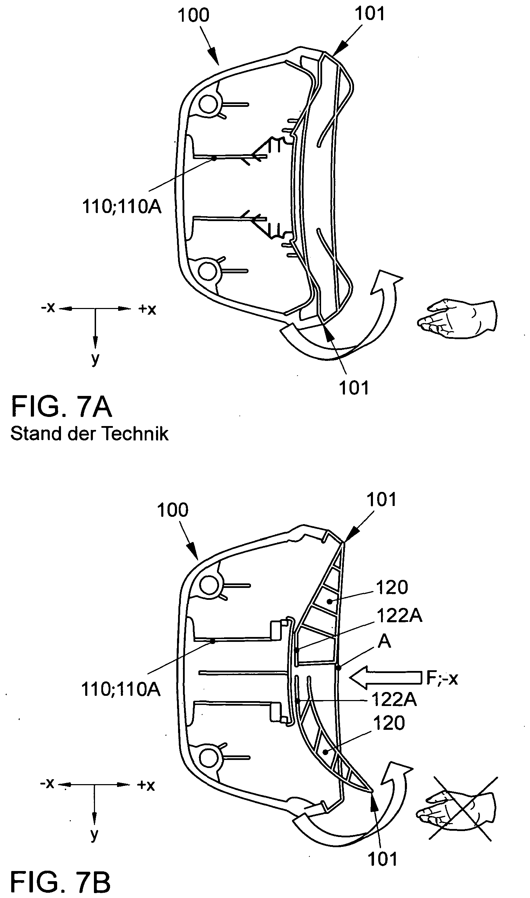

Die Figur 7A zeigt in einem Schnitt in der x/y-Ebene eine herkömmliche Kopfstütze 100 mit Seitenflügeln 101, die an einem Halteelement 110A einer Haltestruktur 110 beweglich befestigt sind. Die als Komfortfunktion vorgesehene Möglichkeit der Verstellung der Seitenflügel 101, bei der die Seitenflügel 101 ausgehend von einer Ausgangsposition in eine Komfortpositionen näher an den Kopf K eines Aufsitzenden herangeführt werden, erfolgt in an sich bekannter Weise manuell oder mittels Antrieben, die zumeist im vorhandenen Bauraum der Kopfstütze 100 untergebracht sind.

Durch den Einsatz der in Figur 7B als Seitenflügel 101 der Kopfstütze 100 eingesetzten autoreaktiven Gerüststrukturen 120, die sich das Finray-Prinzip zu Nutze machen, entfällt in vorteilhafter Weise die Notwendigkeit, die Seitenflügel 101 manuell oder mittels Antrieben betätigen zu müssen. Dieser Vorteil wird in einem weiteren ebenfalls in der x/y-Ebene liegenden Schnitt anhand der Figur 7B verdeutlicht.

In Figur 7B ist im oberen Bereich der Kopfstütze 100 eine autoreaktive Gerüststruktur 120 als Seitenflügel 101 dargestellt, der an seinem Bodenbereich 122A ebenfalls an einem Halteelement 110A der Haltestruktur angeordnet ist, wobei sich der Seitenflügel 101 in der Ausgangsposition befindet und somit die Komfortposition noch nicht eingenommen hat. Im unteren Bereich der Kopfstütze 100 der Figur 7B ist die Gerüststruktur 120 als Seitenflügel 101 vergleichsweise in der Komfortposition dargestellt.

Der Seitenflügel 101 ist gemäß dem dargestellten Pfeil näher an den Seitenbereich eines nicht näher dargestellten Kopfes K herangerückt. Diese Komfortposition wird unter Ausnutzung des Finray-Prinzips bewirkt, wenn bei einer Bewegung des Kopfes K in -x-Richtung eine Hinterseite des Kopfes K mit der Kraft F auf die Auftrefffläche A auftrifft.

Es kommt zu einer autoreaktiven Betätigung der Seitenflügel 101 der Kopfstütze 100. Anders gesagt, erfolgt ein kopfgewichtsaktiviertes selbstständiges Aufrichten der Seitenflügel 101 im Sinne einer Bewegung der Seitenflügel 101 aus der Ausgangsposition entgegen der in -x-Richtung wirkenden Kraftrichtung in die Komfortpositionen in +x-Richtung.

Wenn die Kraft F noch nicht oder nicht mehr auf die autoreaktive Gerüststruktur 120 einwirkt, sind die Seitenflügel 101 unbelastet und sind noch in der Ausgangsposition oder nehmen die Ausgangsposition dann, wenn sie wieder unbelastet sind, selbstständig wieder ein.

In vorteilhafter Weise kommt es so zu einer selbsttätigen Verstellung der Seitenflügel 101 in die Komfortpositionen und zu einer selbsttätigen Rückführung in die Ausgangsposition. Je nachdem, wie groß die Kraft F ist, die auf die Seitenflügel 101 einwirkt, kommt es zu einer optimierten, selbstständigen Konturanpassung der Seitenflügel 101 an den Hinterkopf beziehungsweise die seitlichen Bereiche des Kopfes K des Aufsitzenden.

Ein Vergleich zwischen Figur 7A und Figur 7B verdeutlicht, dass auf die Verwendung von Zügen, Kabeln, Antrieben wie Motoren und Pumpen sowie Reibscharnieren und Steuergeräten verzichtet werden kann. In Figur 7B sind solche Bauteile nicht mehr vorhanden und werden in vorteilhafter Weise zur Verstellung der Seitenflügel 101 der Kopfstütze 100 nicht mehr benötigt.

### Ausbildung einer Gleitebene und Ausformung eines Kopfkastens:

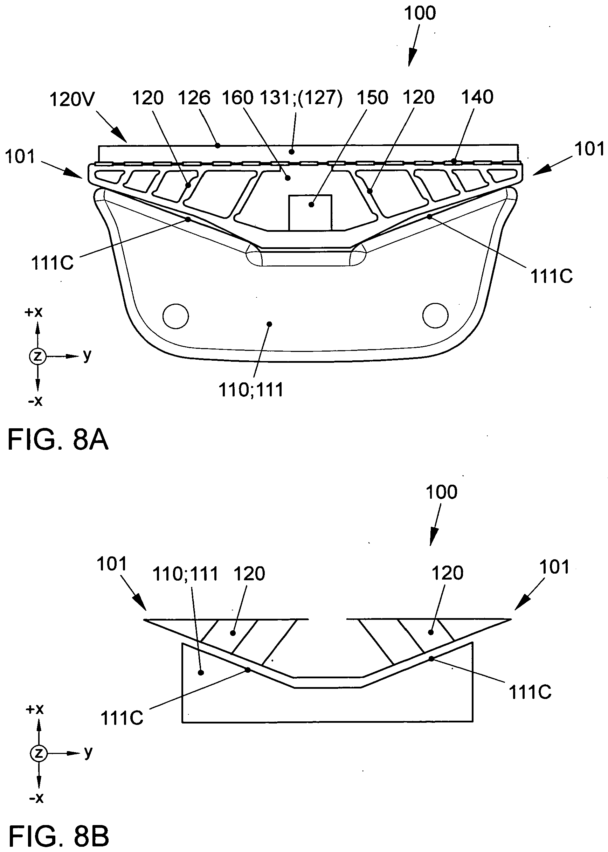

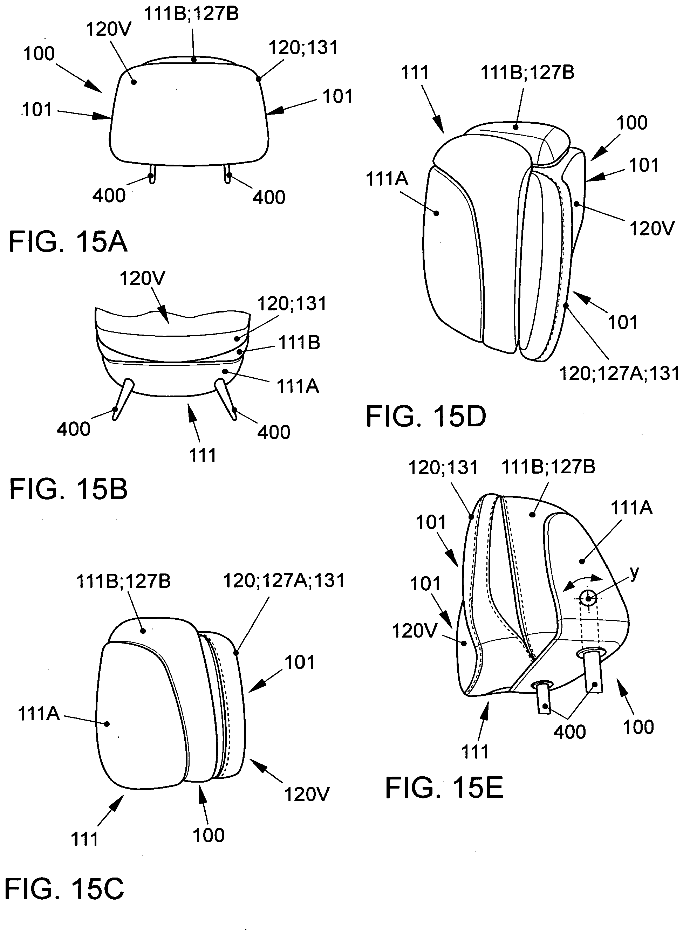

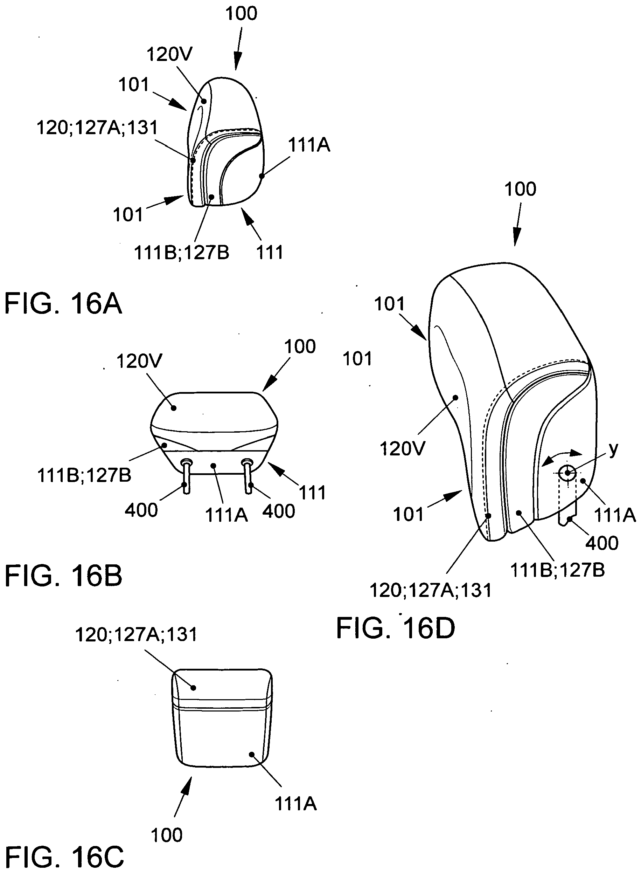

Die Figuren 8A und 8B zeigen in weiteren Schnitten in der x/y-Ebene die Kopfstütze 100 mit der Haltestruktur 110. Während die Haltestruktur 110 in Figur 8A mit einem Bezug 127 versehen ist, ist die Haltestruktur 110 in Figur 8B nur schematisch dargestellt. Der Bezug 127 ist in einer bevorzugten Ausgestaltung auf seiner Innenseite mit einem Schaum kaschiert. In einer solchen Ausgestaltung ist die Haltestruktur 110 ein so genannter Kopfkasten 111, der kastenartig ausgebildet ist und der zumeist auf seiner Außenseite zumindest teilweise mit dem Schaum gepolstert und mit dem Bezug 127 versehen ist, worauf später noch detailliert eingegangen wird. Auf Details zur Ausgestaltung des Kopfkastens wird im Zusammenhang mit den Figuren 15A bis 15E und 16A bis 16D eingegangen.

An dem Kopfkasten 111 ist die autoreaktive Gerüststruktur 120 befestigt, welche die Seitenflügel 101 ausbildet. Auf der Vorderseite 120V der Kopfstütze 100 ist ebenfalls ein Bezug 127 angeordnet. Es wird vorgeschlagen, dass dieser Bezug 127 auf seiner zu der autoreaktiven Gerüststruktur 120 zugewandten Seite ebenfalls eine Schaumkaschierung aufweist, so dass sich eine Anlagefläche 126 des Kopfes K an einem kopfseitigen Polsterelement 131 ausbildet, welches oberhalb der als Seitenflügel ausgebildeten autoreaktiven Gerüststruktur 120 angeordnet ist. Dieses Polsterelement 131 kann unabhängig von der Polsterung des zuvor beschriebenen Kopfkastens 111 ausgebildet werden.

Um die Reibung zwischen dem Polsterelement 131, welches anders als dargestellt um die Seitenflügel 101 bis zum Kopfkasten 111 herumgeführt ist, möglichst gering zu halten, wird vorgeschlagen, zwischen dem Polsterelement 131 unter der autoreaktiven Gerüststruktur 120 in einer sich in z-Richtung erstreckenden Gleitebene 140 Vorkehrungen zu treffen, um den Reibkoeffizienten zwischen der Innenseite des Polsterelementes 131 und der Vorderseite der autoreaktiven Gerüststruktur 120 so gering wie möglich zu halten.

In einer ersten Ausgestaltungsvariante wird vorgeschlagen, zwischen dem Polsterelement 131 unter der autoreaktiven Gerüststruktur 120 ein zusätzliches Bauteil in der Art einer Reibung reduzierenden Folie, insbesondere einer PE-Folie, anzuordnen.

In einer zweiten Ausgestaltungsvariante wird eine die Reibung reduzierende Beschichtung vorgeschlagen.

In einer dritten Ausgestaltungsvariante wird vorgeschlagen, mindestens eine der einander zugewandten Flächen der autoreaktiven Gerüststruktur 120 beziehungsweise des Polsterelementes 131 mit einer Benetzung zu versehen, wobei insbesondere ein Trennwachs vorgeschlagen wird.

Wesentlich ist, um die Funktion, das heißt die Relativbewegung des Polsterelementes 131 gegenüber der autoreaktiven Gerüststruktur 120, möglichst wenig zu behindern, dass die einander zugewandten aneinander liegenden Flächen des Polsterelementes 131 und der Gerüststruktur 120 eine Reibpaarung bilden.

Die Figuren 8A und 8B zeigen ferner in der autoreaktiven Gerüststruktur 120 jeweils eine Öffnung 160 in der Art eines in z-Richtung verlaufenden Spaltes zwischen den Seitenflügeln 101. Der Spalt ist in x-Richtung gesehen axialsymmetrisch angeordnet. Die Öffnung 160, der Spalt, bildet den Zugang zu einem Dämpfungselement 150, auf welches später noch detailliert eingegangen wird.

In dem in den Figuren 8A und 8B dargestellten Ausführungsbeispiel ist die autoreaktive Gerüststruktur 120 gemäß dem dargestellten Schnitt in der x/y-Ebene wannenartig ausgebildet.

Auf dem Boden der Wanne ist das Dämpfungselement 150 angeordnet, während die ansteigenden Seitenbereiche der Wanne die Rückseite der Seitenflügel 101 ausbilden. Die autoreaktive Gerüststruktur 120 weist somit auf ihrer dem Kopfkasten 111 zugewandten Seite eine Ausformung 111C auf, die als wannenartige Kontur ausgebildet ist.

Es hat sich herausgestellt, dass die Effektivität der autoreaktiven Funktion der Gerüststruktur 120 bei der Verstellung der Seitenflügel 101 aus der Ausgangsposition in die Komfortposition und zurück unterstützt wird, wenn der Kopfkasten 111 auf seiner der Gerüststruktur 120 zugewandten Seite eine analoge Ausformung 111C aufweist. Gemäß dem Ausführungsbeispiel weist der Kopfkasten 111 somit ebenfalls eine wannenartige Kontur auf.

### Scharnieraufbau der Gerüststruktur:

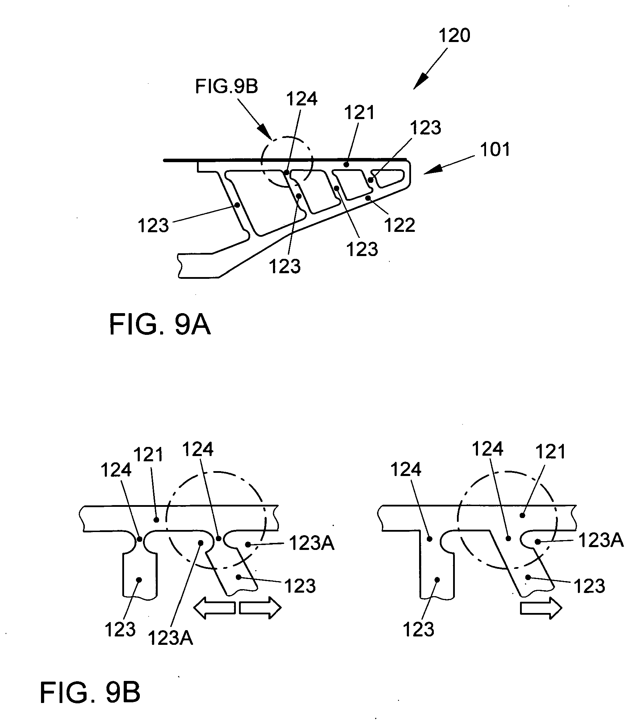

Die Figuren 9A und 9B verdeutlichen in einer Zusammenschau einen bevorzugten scharnierartigen Aufbau der autoreaktiven Gerüststruktur 120. Wie bei der Beschreibung des Grundprinzips erläutert worden ist, sind zwischen den biegeelastischen Flanken 121, 122 elastische Verbindungsmittel 124, in der Art von elastischen Querstreben 123, beweglich angeordnet.

Figur 9A zeigt einen Seitenflügel 101 der Kopfstütze 100, wobei eine der scharnierartigen Verbindungen gemäß der Einzelheit in Figur 9A vergrößert in der rechten Abbildung der Figur 9B gezeigt ist.

Die biegeelastischen Flanken 121, 122 werden auch als Gurte und die Querstreben 123 werden auch als Querspanten bezeichnet.

Als Verbindungsmittel 124 zwischen den Gurten 121, 122 und den Querspanten 123 werden Gelenke oder Scharniere ausgebildet, die ein- oder mehrteilig ausgeführt sind.

Eine einteilige Ausführung ermöglicht in vorteilhafter Weise die Herstellung der autoreaktiven Gerüststruktur in einem Arbeitsgang aus ein und demselben Material.

Eine zweiteilige Ausführung ermöglicht in vorteilhafter Weise die Herstellung der autoreaktiven Gerüststruktur 120 aus verschiedenen Materialien in mehreren Arbeitsgängen.

Die Ausgestaltung des Scharniers oder Gelenkes kann in einer ersten bevorzugten Ausgestaltung derart erfolgen, dass die Scharnierstelle beziehungsweise die Gelenkstelle beispielsweise zwischen Gurt 121 und Querspant 123 durch beidseitige nach innen geführte Auskragungen 123A im Querspant 123 erfolgt, wodurch die Elastizität der Scharnierstelle beziehungsweise der Gelenkstelle beeinflusst werden kann.

Die linke Abbildung in Figur 9B zeigt eine erste bevorzugte Ausgestaltung mit den beidseitigen nach innen geführten Auskragungen 123A, die eine beidseitige Materialschwächung hervorrufen, so dass gemäß den beiden in entgegengesetzter Richtung angeordneten Pfeilen deutlich wird, dass die Bewegung des Querspants 123 gegenüber dem Gurt 121 in beide Bewegungsrichtungen begünstigt wird.

Die rechte Abbildung in Figur 9B zeigt eine zweite bevorzugte Ausgestaltung mit nur einer einseitigen nach innen geführten Auskragung 123A gemäß Figur 9A. Bei dieser einseitigen Auskragung 123A wird gemäß dem nur in einer Richtung angeordneten Pfeil deutlich, dass durch die einseitige Materialschwächung des Querspants 123 an der Scharnierstelle beziehungsweise der Gelenkstelle nur eine Bewegungsrichtung durch die Materialschwächung des Querspants 123 beeinflusst wird.

Diese zweite bevorzugte Ausgestaltung ist insofern von Vorteil, da bei der Bewegung der Seitenflügel 101 von der Ausgangsposition in die Komfortposition der Widerstand am Ort der Materialschwächung des Querspants 123 an der Verbindungsstelle zum Gurt 121 minimal ist.

Der Querspant 123 beziehungsweise die Querspanten 123 lassen sich somit leicht und ohne großen Widerstand innerhalb der Gurte 121, 122 umlegen, so dass die Verstellung von der Ausgangsposition in die Komfortposition bereits bei nur geringem Krafteintrag F erfolgt.

Ein weiterer Vorteil der einseitigen Auskragung 123A besteht ferner darin, dass die Materialstärke des Querspants 123 vollständig genutzt werden kann, um die Materialschwächung auf der Seite des Querspants 123 vorzusehen, auf der ein Abknicken des Querspant 123 gegenüber dem Gurt 121 erfolgt, wenn der Seitenflügel 101 von seiner Ausgangsposition in seine Komfortposition verstellt wird.

Andererseits wird eine Rückstellung der Seitenflügel 101 von der Komfortposition in die Ausgangsposition unterstützt, da der gegenüberliegende Bereich bei der einseitigen Auskragung 123A materialseitig nicht geschwächt ist, da der Querspant 123 gegenüber dem Gurt 121 während der Bewegung von der Ausgangsposition in die Komfortposition gespannt wird. Bei der Rückstellung drängt der Querspant 123 in seine Ausgangslage zurück, wodurch die Rückstellung der Seitenflügel 101 durch die in dem jeweiligen Querspant 123 bei der Bewegung von der Ausgangsposition in die Komfortposition entstehenden Vorspannung unterstützt wird.

Wie Figur 9A verdeutlicht, wird bei einer einseitigen Auskragung 123A vorgeschlagen, die gegenüberliegenden Verbindungsstellen eines Querspants 123 wechselseitig anzuordnen.

An der Verbindungsstelle zwischen der biegeelastischen Flanke 121 (Gurt) und Querstrebe 123 (Querspant) ist die Auskragung 123A rechts und an der gegenüberliegenden Verbindungsstelle zwischen der biegeelastischen Flanke 122 (Gurt) und Querstrebe 123 (Querspant) ist die Auskragung 123A links ausgeführt. Durch diese wechselseitige Anordnung der Auskragungen wird die Abknickbewegung der autoreaktiven Gerüststruktur 120 des Seitenflügels 101 von der Ausgangsposition in die Komfortposition und zurück begünstigt.

### Ausgestaltung einer V-Stellung des Anlagebereiches der Kopfstütze:

Es hat sich herausgestellt, dass eine leichte V-Stellung der Seitenflügel 101 komfortseitig als angenehm empfunden wird. Eine solche V-Stellung wird auch als "Schüsselung" der Anlagefläche bezeichnet.

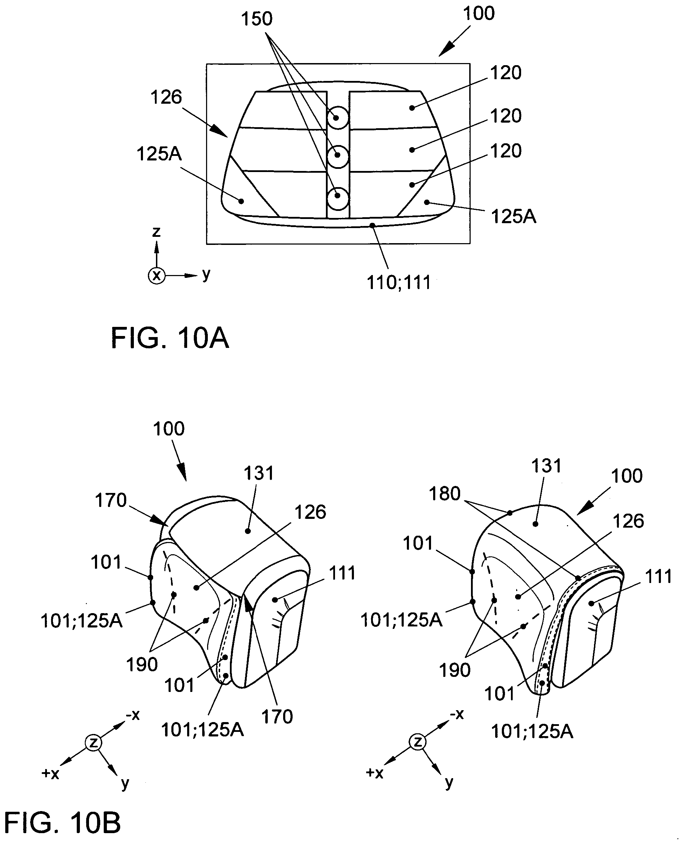

Innerhalb der V-Stellung wird außerdem eine stärkere "Schüsselung" der Seitenflügel 101 im unteren Bereich der Kopfstütze 100 gegenüber dem oberen Bereich der Kopfstütze 100 als angenehm empfunden. Das heißt, im oberen Bereich der Kopfstütze 100 liegen die Seitenflügel 101 gemäß den Figuren 10A und 10B im Wesentlichen in einer z/y-Ebene, während die Seitenflügel 101 im unteren Bereich der Kopfstütze 100 schüsselartig aus der z/y-Ebene nach vorn zum Kopf K eines Aufsitzenden heraustreten.

### Eine "Schüsselung" wird technisch wie folgt umgesetzt.

Zur Ausbildung der angestrebten "Schüsselung" der Anlagefläche 126 der Kopfstütze 100 wird eine erste Vorgehensweise vorgeschlagen, die darauf beruht, dass die autoreaktive Gerüststruktur 120 geometrisch derart ausgebildet wird, dass diese "Schüsselung" innerhalb eines einteiligen Bauteiles entsteht. Es wird vorgeschlagen, die Materialdicke der Gerüststruktur 120 zu variieren beziehungsweise die Ausbildung und Anzahl der gegebenenfalls unterschiedliche Materialdicken aufweisenden Querspanten 123 und Gurte 121, 122 zu variieren, so dass durch unterschiedliche Materialdicken eine "Schüsselung" hervorgerufen wird.

Zu dieser ersten Vorgehensweise gehört grundsätzlich auch die in Figur 10A dargestellte Lösung. Im unteren Bereich der Gerüststruktur 120 werden Pad's, insbesondere Schaum-Pad's, die vorzugsweise aus einem harten Schaum bestehen, angeordnet.

Diese Pad's können als Eck-Schaumteil 125A ausgebildet und auf der autoreaktiven Gerüststruktur 120 befestigt insbesondere aufgeklebt sein. Durch die Anordnung in den unteren Ecken der Anlagefläche der Kopfstütze 100 - links und rechts in y-Richtung gesehen - werden die unteren Eckbereiche gegenüber der in Ausgangsposition I im Wesentlichen in der z/y-Ebene liegenden Anlagefläche 126 angehoben werden. Die Eck-Schaumteile 125A können an einteiligen Gerüststrukturen 120 oder einer mehrteiligen Gerüststruktur 120, wie nachfolgend erläutert wird, angeordnet werden.

In einer zweiten aufwändigeren Vorgehensweise wird nämlich vorgeschlagen, gemäß Figur 10A mehrere autoreaktive Gerüststrukturen 120 mit unterschiedlichen, an die gedachte Linie der Außenkontur der Kopfstütze 100 angepassten, geometrischen Formen in z-Richtung gesehen untereinander anzuordnen. So kann eine erste Gerüststruktur 120 im oberen Bereich der Kopfstütze 100 angeordnet werden, welche in der z/y-Ebene liegt, während die darunter liegende zweite Gerüststruktur 120 im mittleren Bereich der Kopfstütze 100 leicht und eine dritte Gerüststruktur 120 im unteren Bereich der Kopfstütze 100 am stärksten geometrisch in +x-Richtung "vorgeschüsselt" ist. Es versteht sich, dass mehr als drei oder auch weniger als drei Gerüststrukturen 120 verwendet werden können, um die geschüsselte V-Stellung der Anlagefläche 126 der Kopfstütze 100 auszubilden.

Die zweite Vorgehensweise ist mit der ersten Vorgehensweise kombinierbar, wie in Figur 10A dargestellt ist. Eine aus mehreren autoreaktiven Gerüststrukturen gebildete Gerüststruktur 120 ist im Bereich der unteren Gerüststruktur beidseitig mit Eck-Schaumteilen 125A versehen, so dass die Anlagefläche 126 der Kopfstütze 100 bereits in der Ausgangsposition I in +x-Richtung "vorgeschüsselt" ist. Darüber hinaus könnte die dritte Gerüststruktur 120 im unteren Bereich der Kopfstütze 100 in Ausgangsposition I der Gerüststruktur zusätzlich am stärksten geometrisch in +x-Richtung "vorgeschüsselt" sein, so dass die Vorgehensweisen in Kombination zum Einsatz kommen.

Es wird eine dritte Vorgehensweise vorgeschlagen, die in Figur 10B in einer linken und einer rechten Abbildung dargestellt wird. Die "Schüsselung" wird dabei nicht über die geometrischen Eigenschaften der autoreaktiven Gerüststrukturen 120 oder durch Anordnung der Eck-Schaumteile 125A hergestellt, sondern die oberen äußeren Ecken des Polsterelementes 131 erhalten in einer ersten Variante in etwa im Bereich des oberen Endes der Anlagefläche 126 der Kopfstütze 100 eine Fixierung 170 (linke Abbildung Figur 10B) am Kopfkasten 111.

In einer zweiten Variante der dritten Vorgehensweise wird keine Fixierung 170 vorgesehen, sondern das Polsterelement 131 wird über den Kopfkasten 111 herumgeführt. Diese Umlegung 180 (rechte Abbildung Figur 10B) bewirkt ebenfalls, dass die oberen äußeren Ecken des Polsterelementes 131 am Kopfkasten 111 fixiert werden.

In einer dritten Variante der dritten Vorgehensweise wird vorgeschlagen, die Fixierung 170 und die Umlegung 180 des Polsterelementes 131 zu kombinieren.

Es versteht sich, dass die Varianten der dritten Vorgehensweise zur Erzeugung der "Schüsselung" mit der ersten oder zweiten Vorgehensweise ebenfalls in Kombination ausgeführt werden können, wie Figur 10B anhand der Bezugszeichen in der linken und rechten Abbildung verdeutlicht.

Durch die Fixierung 170 (linke Abbildung Figur 10B) beziehungsweise Umlegung 180 (rechte Abbildung Figur 10B) wird die ein- oder mehrteilige autoreaktive Gerüststruktur 120 durch das Polsterelement 131 im oberen Bereich in der z/y-Ebene gehalten, während der mittlere und untere Bereich gegenüber dem Kopfkasten 111 in Ausgangsposition I in der vorgeschüsselten Position ausgebildet ist und dadurch bereits in der Ausgangsposition I eine geschüsselte Kontur bildet.

Zu Vorschüsselung wird die Geometrie der autoreaktiven Gerüststruktur 120 vorgegeben und/oder es wird der Einsatz der Eck-Schaumteile 125A in den unteren Eckebereich der autoreaktiven Gerüststruktur 120 der Seitenflügel 101 vorgeschlagen. Die Eck-Schaumteile 125A werden in den Figuren 10A und 10B anhand der Bezugszeichen 125A angedeutet. Sie liegen hinter dem Polsterelement 131 auf der autoreaktiven Gerüststruktur 120.

### Abstimmung der Länge und der Abstände der Querstreben (Querspanten):

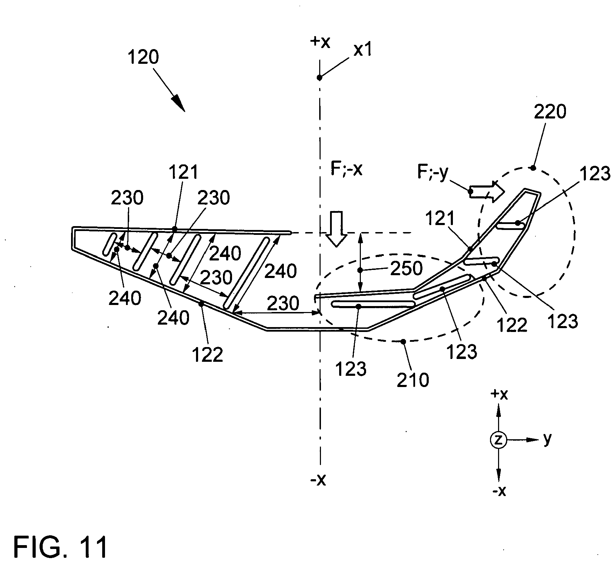

Ferner hat sich herausgestellt, dass durch die Abstimmung des Abstandes 230 zwischen den Querspanten 123 und durch die Auswahl der Länge 240 der Querspanten 123 zwischen den Gurten 121, 122 ein vorteilhafter Effekt erzeugt wird, der anhand der Figur 11 verdeutlicht wird.

In Figur 11 ist wieder in einem schematischen Schnitt in der x/y-Ebene eine autoreaktive Gerüststruktur 120 dargestellt, wobei der linke Teil der Gerüststruktur 120 in einer Ausgangsposition dargestellt ist und der rechte Teil der Gerüststruktur 120 zum Vergleich und zur Verdeutlichung des Effektes in einer Komfortposition dargestellt ist.

In der Ausgangsposition (links) ist dargestellt, dass die Länge 240 der Querspanten 123 ausgehend von einer axialsymmetrischen Mittelachse x1 von innen nach außen abnimmt. Zudem wird ausgehend von der axialsymmetrischen Mittelachse x1 der Abstand 230 zwischen den Querspanten 123 von innen nach außen immer geringer.

Wie in der dargestellten Komfortposition (rechts) deutlich wird, gehen die Querstreben 123 in einem mittleren Bereich 210 beim Einwirken der Verstellkraft F in -x-Richtung "auf Block", das heißt, die Querspanten 123 liegen im Wesentlichen parallel zu den Gurten 121, 122.

Der Vorteil besteht in der maximalen Strukturausnutzung der Gerüststruktur 120, das heißt, der vorhandene Bauraum wird optimal ausgenutzt, da dadurch, dass die Querspanten 123 im mittleren Bereich 210 "auf Block" gehen, ein großer optimierter Verstellweg 250 in -x-Richtung erreicht wird.

Zudem werden in vorteilhafter Weise, insbesondere im mittleren Bereich 210, Druckspitzen verhindert.

Durch den geringeren Abstand 230 und die geringere Länge 240 in dem äußeren Bereich 220 der autoreaktiven Gerüststruktur 120 werden die Seitenflügel 101 optimal ausgesteift, so dass der Seitenflügel 101 bei einer aus y-Richtung auf den Seitenflügel 101 einwirkenden Kraft F einen optimalen verbesserten Seitenhalt bietet.

### Aussteifung des Bodenbereiches der Gerüststruktur:

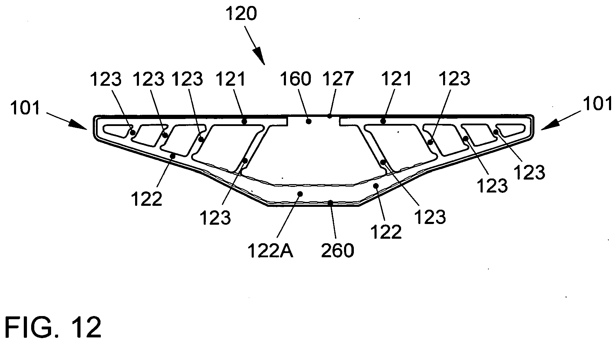

Ein weiteres vorteilhaftes Konstruktionsmerkmal wird in Figur 12 verdeutlicht. Die auf der Rückseite 120R der Gerüststruktur 120 ausgebildete biegeelastische Flanke 122 weist einen materialverstärkten Bodenbereich 122A auf. Die Verstärkung des Materials des Bodenbereiches 122A dient der Stabilität der Gerüststruktur insgesamt.

Um die Stabilität der Rückseite 120R noch weiter zu erhöhen, wird der verstärkte Bereich zusätzlich mit einer Aussteifung 260 versehen. Die Aussteifung 260 umfasst den Bodenbereich 122A und wird im Ausführungsbeispiel in Richtung der Enden der Seitenflügel 101 über die ersten Querspanten 123 hinaus geführt.

Durch die Aussteifung 260 wird in vorteilhafter Weise erreicht, dass die Gerüststruktur 120 nicht ungewollt durch eine Bezugsspannung des Bezuges 127 "vorgeschüsselt" wird. Ein straff angeordneter Bezug 127 führt sonst zu einer ungewollten Verstellbewegung der Seitenflügel 101 nach vorn in Kopfrichtung des Aufsitzenden. Durch die Aussteifung 260 wird einer solchen ungewollten Verstellbewegung vorteilhaft entgegengewirkt.

### Aufbau der Kopfstütze mittels Schaumauflagen:

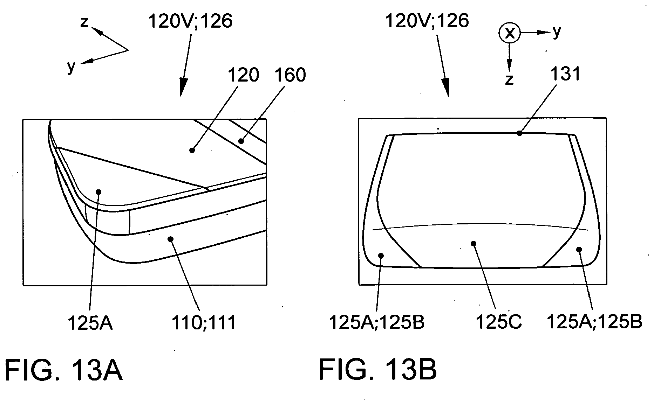

Die Figur 13A zeigt eine Ausgestaltungsvariante zur Ausbildung der Kopfstütze 100. Wie beschrieben wird die Anlagefläche 126 des Kopfes K durch das mit einem Bezug versehene Polsterelement 131 gebildet, welches vorzugsweise durch die Gleitebene 140 getrennt (siehe Figur 8A) auf der autoreaktiven Gerüststruktur 120 sitzt.

In der Figur 13A wird in der perspektivischen Ansicht seitlich schräg von oben die Vorderseite 120V der Kopfstütze 100 der autoreaktiven Gerüststruktur 120 (ohne Polsterelement 131) dargestellt, wobei im linken unteren Eckbereich der autoreaktiven Gerüststruktur 120 der Kopfstütze 100 ein Eck-Schaumteil 125A angeordnet und befestigt, insbesondere auf die autoreaktive Gerüststruktur 120 aufgeklebt ist.

Die Figur 13A ergänzt die Darstellung der Figur 10A, wobei die autoreaktive Grundstruktur 120 in Figur 13A als einteilige Gerüststruktur 120 ausgebildet und dargestellt ist. Die Figur 10A zeigt anders als Figur 13A eine mehrteilige autoreaktive Gerüststruktur 120 mit vorzugsweise aufgeklebten Eck-Schaumteilen 125A.

Der Einsatz der Eck-Schaumteile 125A im unteren Bereich der Seitenflügel 101 dient der komfortablen Ausgestaltung der Kopfstütze 100 mit erhabenen Eckbereichen, wodurch die Anlagefläche 126 der Kopfstütze 100 verändert wird, da die Anlagefläche jetzt einen sogenannten Polsterkragen, ähnlich eines "Hörnchen"-Kissens, bildet.

In Figur 13A ist analog zu Figur 10A die Gleitebene 140 auf der autoreaktiven Gerüststruktur 120 und den Eck-Schaumteilen 125A ausgebildet. Das einteilige Polsterelement 131 wird somit auf die einteilige Gerüststruktur (Figur 13A) oder die mehrteilige autoreaktive Gerüststruktur 120 (Figur 10A) und die Eck-Schaumteile 125A aufgelegt, wobei das Polsterelement 131 durch die Eck-Schaumteile 125A den gewünschten Polsterkragen ausbildet. Über die Gleitebene 140 ist das Polsterelement 131 gegenüber der autoreaktiven Gerüststruktur 120 und den Eck-Schaumteilen 125A beweglich, wenn sich die Seitenflügel 101 bewegen.

In der Figur 13A liegt das Polsterelement 131 wie in Figur 8A bereits gezeigt ist in einer Ebene - in x-Richtung gesehen - vor der autoreaktiven Gerüststruktur 120 mit dem Unterschied, dass das Polsterelement 131 jetzt durch die Eck-Schaumteile 125A in den unteren Ecken leicht aus z/y-Ebene heraussteht, mithin leicht angehoben ist.

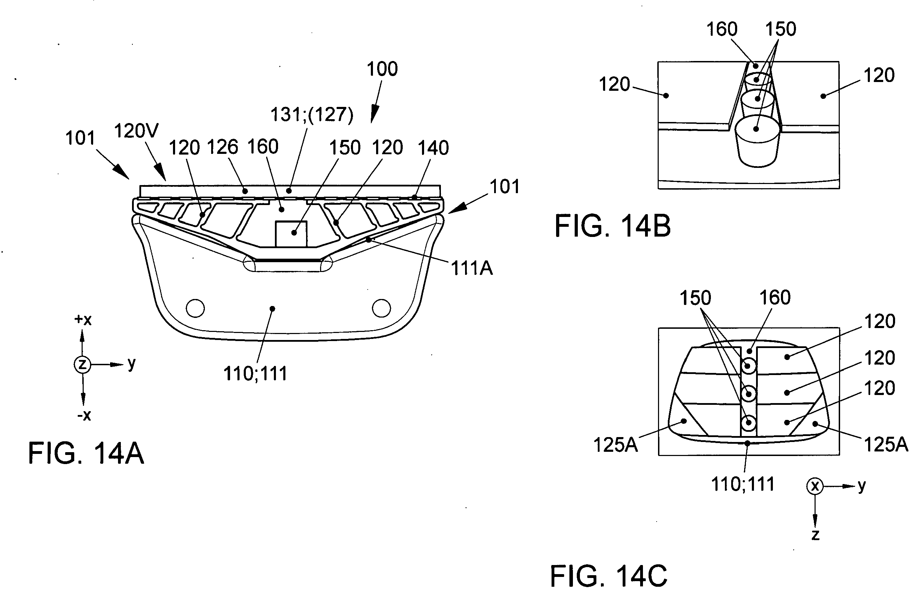

In der Figur 13B wird in einer perspektivischen Draufsicht von vorn auf die Vorderseite 120V der Kopfstütze 100 ebenfalls ein Polsterelement 131 vorgestellt, welches wie in Figur 8A bereits gezeigt in einer Ebene - in x-Richtung gesehen - vor der autoreaktiven Gerüststruktur 120 angeordnet ist. Das Polsterelement 131 ist in Figur 13B perspektivisch und in der Figur 8A und der nachfolgenden Figur 14A als Schnitt durch die Kopfstütze 100 dargestellt.

Die Figur 13B verdeutlicht eine Ausgestaltungsvariante, bei der das Polsterelement 131 mehrere Schaumteile 125C und 125B oder 125V und 125A umfasst.

In der dargestellten Ausführungsform liegen die Schaumteile 125C, 125B oder 125C, 125A auf der autoreaktiven Gerüststruktur 120 auf. Zwischen der autoreaktiven Gerüststruktur 120 und dem mehrteiligen Polsterelement 131 liegt die Gleitebene 140.

Das Polsterelement 131 ist ein Schnittschaumteil aus mehreren Schaumteilen ausgebildet. Die Schaumteile 125C, 125B oder 125C, 125A sind in der Ebene (gemäß Figur 13B in der z/y-Ebene) miteinander verklebt und werden gemeinsam durch den in Figur 13B nicht näher dargestellten Bezug gehalten, wobei der Bezug vorzugsweise gleichzeitig die autoreaktive Gerüststruktur 120 umgibt.

Im dargestellten Ausführungsbeispiel ist das Polsterelement 131 als ein zentrales Mittel-Schaumteil 125C ausgebildet, welches von Rand-Schaumteilen 125B, welche jeweils den seitlichen Rand und die unteren Ecken des Polsterelementes 131 bilden, umgeben ist.

Wahlweise ist (nicht dargestellt) ein zentrales Mittel-Schaumteil 125C gemeinsam mit beidseitig angeordneten Eck-Schaumteilen 125A vorgesehen, so dass das Mittel-Schaumteil 125C bis zum Rand geführt ist und nur in den unteren Ecken durch Eck-Schaumteile 125A ergänzt wird.

In der Ausgangsposition I liegen das Mittel-Schaumteil 125C und die Rand-Schaumteile 125B in der gleichen z/y-Ebene oder die Rand-Schaumteile 125B treten - erhaben - leicht aus der z/y-Ebene heraus.

Bei der wahlweisen Anordnung der Eck-Schaumteile 125A liegen die unteren Ecken ebenfalls in der z/y-Ebene oder sind analog zu den Rand-Schaumteilen 125B - erhaben - ausgebildet und treten bereits in der Ausgangsposition I der Gerüststruktur 120 aus der z/y-Ebene heraus.

Dadurch wird bereits in der Ausgangsposition I eine Anlagefläche 126 der Kopfstütze 100 ausgebildet, bei der die Randbereiche und die unteren Ecken oder nur die unteren Ecken leicht hervorstehen. Dieser Effekt bleibt bei der Bewegung der Seitenflügel 101 der Kopfstütze 100 von der Ausgangsposition I in die verstellte Schlummer- oder Crash-Position II erhalten.

Diese komfortable Ausgestaltung mit erhabenen Bereichen ist bei den Benutzern beliebt. In einer solchen Ausgestaltung wird die Kopfstütze 100 wie bereits erwähnt als "Hörnchen"-Kopfstütze bezeichnet. Die Rand-Schaumteile 125B oder Eck-Schaumteile 125A bilden am Rand und/oder den unteren Ecken den Polsterkragen, ähnlich des "Hörnchen"-Kissens.

Zudem ist vorgesehen, das Mittel-Schaumteil 125C aus einem weichen Schaum und die Rand-Schaumteile 125B beziehungsweise die Eck-Schaumteile 125A aus einem härteren Schaum auszubilden. Der Effekt ist, dass sich der weichere Schaum leichter an die Kopfform der Hinterseite des Kopfes K anschmiegt, wobei der härtere unnachgiebigere Schaum den Seitenhalt des Kopfes K sichert, sowie das Komfortempfinden verbessert und einen faltenminimierten Bezugsaufbau im Rand und/oder Eckbereich des Polsterelementes 131 ermöglicht.

Hinzu kommt, dass als Schaum weicher und härterer viskoelastischen Schaum verwendet wird. Das Mittel-Schaumteil 125C wird aus einem weichen viskoelastischen Schaum und die Rand-Schaumteile 125B beziehungsweise die Eck-Schaumteile 125A werden aus einem härteren viskoelastischen Schaum ausgebildet. Viskoelastischer Schaum reagiert in vorteilhafter Weise noch besser als nichtviskoelastischer Schaum auf die individuelle Kopfform und schmiegt sich in vorteilhafter Weise perfekt an die Kopfform an. Der viskoelastische Schaum bietet eine nachweisbare hohe Druckentlastung, sowohl bei geringer als auch bei hoher Gewichtsbelastung. Der weiche und harte viskoelastische Schaum reagiert bei normaler Benutzung oder in einem Crashfall optimal und verteilt den Druck in Abhängigkeit der einwirkenden Kraft unter Verhinderung von Druckpunkten innerhalb des Polsterelementes 131.

### Beeinflussung des Funktionsempfindens:

Die Figuren 14A bis 14C verdeutlichen eine Ausführungsvariante, die das Funktionsempfinden des Benutzers der Kopfstütze 100 eines Fahrzeugsitzes in vorteilhafter Weise beeinflusst. Die Figur 14A entspricht der Figur 8A. Bei der Beschreibung zu der Figur 8A wurde bereits das Dämpfungselement 150 vorgestellt.

Um die Verstellbewegung der Seitenflügel 101 möglichst gleichmäßig zu gestalten, wird vorgeschlagen, den auf der Innenseite des Bezuges 127 des Polsterelementes 131 angeordneten beziehungsweise ankaschierten Schaum als viskoelastischen Schaum auszubilden.

Der Schaum kann an die Rückseite des Bezuges 127 ankaschiert oder mit der Rückseite des Bezuges 127 vernäht sein. Der Schaum kann auch lose unterhalb des Bezuges 127 auf der Gerüststruktur 120 aufliegen.

Die Verwendung eines viskoelastischen Schaumes bietet den Vorteil, dass der viskoelastische Schaum bei einer schnellen großen Krafteinwirkung F auf die Kopfstütze in -x-Richtung einen hohen Widerstand erzeugt. Im Gegensatz dazu, ist bei einer langsamen kleinen Krafteinwirkung F der viskoelastische Schaum kaum spürbar. Der viskoelastische Schaum bildet dann nur einen geringen Widerstand.

Bei der Verstellbewegung der Seitenflügel 101 der autoreaktiven Gerüststruktur 120 von der Ausgangsposition in die Komfortposition kommt es durch den viskoelastischen Schaum prinzipiell zu einer Vergleichmäßigung der Verstellbewegung. Die Komfortposition stellt sich beim Auftreffen der Kraft F nicht schlagartig ein, da der viskoelastische Schaum in Abhängigkeit der einwirkenden Kraft F die Verstellbewegung vergleichmäßigt.

Bei der Bewegung des Kopfes K des Aufsitzenden in Richtung der Kopfstütze 100 bildet die Hinterseite des Kopfes K eine Anlagefläche 126 an der Kopfstütze 100. Bei der Beschreibung des Grundprinzips wurde bereits ein Auftreffpunkt P und eine Auftrefffläche A definiert. In diesem Bereich wird mindestens das eine bereits erwähnte Dämpfungselement 150 angeordnet.

Im Ausführungsbeispiel sind drei Dämpfungselemente 150 angeordnet, die als so genannte Druckpilze ausgebildet sind. Diese Dämpfungselemente 150 werden ebenfalls aus einem Schaum ausgebildet, wobei in vorteilhafter Weise ebenfalls vorgeschlagen wird, einen viskoelastischen Schaum zu verwenden, wodurch die zuvor beschriebenen Vorteile auch im Bereich der Auftrefffläche A beziehungsweise des Auftreffpunktes P des Kopfes K auf die Kopfstütze 100 wirksam werden. Die Figuren 14A bis 14C zeigen jeweils die Dämpfungselemente 150, die in der Gerüststruktur 120 angeordnet sind. Die Gerüststruktur 120 bildet im vorderen Bereich einen Spalt 160, über den die Dämpfungselemente 150 zugänglich werden, so dass die Hinterseite des Kopfes K zusätzlich zur den dämpfenden Eigenschaften des Polsterelementes 131 auf die Dämpfungselemente 150 trifft, die einen weiteren dämpfenden Effekt entfalten.

Es stellt sich eine angenehme dämpfende Wirkung beim Auftreffen des Kopfes K auf die Kopfstütze ein. Die Zugänglichkeit des Kopfes K zu den Dämpfungselementen 150 wird durch die bereits beschriebene, in der Gerüststruktur vorgesehene, Öffnung, insbesondere den Spalt 160, gewährleistet.

### Produktgestaltung:

Die Figuren 15A bis 15E zeigen in verschiedenen Ansichten eine Kopfstütze 100 in einer ersten Produktgestaltungsvariante. Die Figur 15A zeigt eine Vorderansicht, während die Figur 15B eine Unteransicht der Kopfstütze 100 zeigt. Die Figuren 15C bis 15E zeigen Seitenansichten, wobei die jeweilige Vorderseite mit dem Bezugszeichen 120V versehen ist. Die Kopfstütze 100 umfasst einen Kopfkasten 111, der die Haltestruktur 110 für die Gerüststruktur 120 ist oder in dessen Hohlraum eine Haltestruktur 110 ausbildet ist. Der Kopfkasten 111 dient dabei gleichzeitig zur Befestigung der Haltestangen 400 der Kopfstütze 100.

Der Kopfkasten 111 weist ein Basisteil 111A und ein Zwischenteil 111B auf. In der gezeigten Ausgestaltung ist das Basisteil 111A ein Kunststoffteil, welches nicht mit einem Bezug versehen ist. Das Zwischenteil 111B ist ein Schaumteil, welches mit einem zweiten Bezugteil 127B versehen ist oder es wird ebenfalls als fester Kopfkasten ausgestaltet, der nur mit einem Bezug 127B oder mit einem auf der Innenseite des Bezuges 127B ankaschierten Schaum versehen ist. Das Zwischenteil 111B liegt teilweise innerhalb des Basisteiles 111A und ist in geeigneter Weise mit dem Basisteil 111A verbunden.

An der Vorderseite 120A der Kopfstütze 100 ist die autoreaktive Gerüststruktur 120 mit den verstellbaren Seitenflügeln 101 angeordnet. Auf der autoreaktiven Gerüststruktur 120 ist das Polsterelement 131 angeordnet, welches bereits detailliert beschrieben worden ist.

Die Gerüststruktur 120 und das Polsterelement 131 bilden in bevorzugter Ausgestaltung gemäß der linken Abbildung der Figur 10B ein separates "Finray-Polsterelement" 120, 131 aus, welches mit einem ersten Bezugsteil 127A versehen ist. Die getrennte Ausgestaltung des "Finray-Polsterelementes" 120, 131 ermöglicht, dass das "Finray-Polsterelement" 120, 131 optional entnehmbar ausgebildet werden kann. Die beschriebene Fixierung 170 an der Kopfstütze 100 wird um die Entnahme zu gewährleisten lösbar ausgestaltet. Das "Finray-Polsterelement" 120, 131 kann von dem Kopfkasten 111 in dieser Ausgestaltung von dem Zwischenteil 111B getrennt werden und als Kopfkissen verwendet werden. Eine entsprechende Aufhängung zur Befestigung beziehungsweise zur Entnahme des "Finray-Polsterelementes" 120, 131 wird im Kopfkasten 111 entweder am Zwischenteil 111B und/oder am Basisteil 111A vorgesehen.

Die Figuren 16A bis 16D zeigen in verschiedenen Ansichten eine Kopfstütze 100 in einer zweiten Produktgestaltungsvariante. Die Figur 16A zeigt eine Vorderansicht, während die Figur 16B eine Unteransicht der Kopfstütze 100 zeigt. Die Figur 16C zeigt eine Hinteransicht und die Figur 16D eine Seitenansicht, wobei die jeweilige Vorderseite mit dem Bezugszeichen 120V versehen ist.

Die Kopfstütze 100 umfasst ebenfalls einen Kopfkasten 111, der die Haltestruktur 110 für die Gerüststruktur 120 darstellt. Der Kopfkasten 111 dient dabei gleichzeitig zur Befestigung der Haltestangen 400 der Kopfstütze 100. Der Kopfkasten 111 weist ebenfalls ein Basisteil 111A (ohne Bezug) und ein Zwischenteil 111B mit einem zweiten Bezugsteil 127B auf. Das Zwischenteil 111B liegt auch in dieser Ausgestaltungsvariante teilweise innerhalb des Basisteiles 111A und ist in geeigneter Weise mit dem Basisteil 111A verbunden.

Der Unterschied zu der ersten Produktgestaltungsvariante besteht darin, dass das Polsterelement 120, 131 mit dem ersten Bezugsteil 127A analog zur rechten Abbildung gemäß

Figur 10B um den oberen Teil des Zwischenteils 111B des Kopfkastens 111 herumgelegt ist. Dieses über das Zwischenteil 111B geführte, auf das Zwischenteil 111B gelegte Polsterelement 120, 131 kann optional ebenfalls entnehmbar ausgestaltet werden und als Kopfkissen verwendet werden.

### Wirkungsverstärkung:

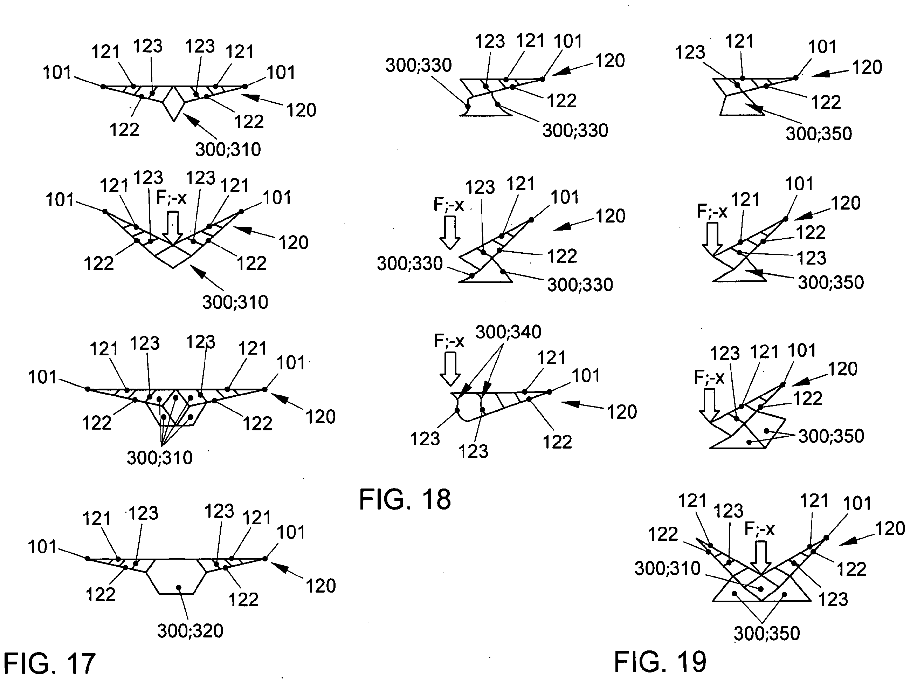

Zur Verstärkung des Verstellweges der Seitenflügel 101 von der Ausgangsposition in die Komfortposition werden abschließend in den Figuren 17, 18 und 19 vorteilhafte Lösungen präsentiert.

In den Figuren 17, 18 und 19 sind die Seitenflügel 101 der Gerüststrukturen 120 schematisch dargestellt.

Eine erste Ausgestaltungsmöglichkeit, die anhand der beiden oberen Abbildungen in Figur 17 verdeutlicht wird, besteht darin, im Bodenbereich 122A eine Verstärkungsstruktur 300 in der Art einer Rautenstruktur 310 in die Gerüststruktur 120 zu integrieren. Bei einer Krafteinwirkung F in -x-Richtung weicht die Rautenstruktur 310, gemäß der zweiten Abbildung von oben, seitlich aus und die an der Rautenstruktur 310 angeordneten Seitenflügel 101 werden gegenüber den bisher beschriebenen Gerüststrukturen 120 stärker in Komfortposition ausgestellt.

Eine zweite Ausgestaltungsmöglichkeit besteht gemäß Figur 17, dritte Abbildung von oben darin, die Verstärkungsstruktur 300 in einer Variation von mehreren Rautenstrukturen 110 auszubilden.

Eine dritte Ausgestaltungsmöglichkeit besteht darin, die Verstärkungsstruktur 300 als Hexaederstruktur 320 auszubilden, wobei mit Hilfe der Hexaederstruktur 320 der gleiche zuvor beschriebene Effekt erreichbar ist.

Die Figur 18 zeigt weitere Ausgestaltungsmöglichkeiten, den Verstellweg der Seitenflügel 101 in die Komfortposition zu vergrößern. Eine wiederum im Bodenbereich 122A angeordnete Verstärkungsstruktur 300 wird, gemäß der oberen Abbildung der Figur 18, mit vorgebogenen Stegen 330 ausgebildet. Bei einer Krafteinwirkung F in -x-Richtung, gemäß der mittleren Abbildung der Figur 18, stellen sich bei dieser vierten Ausgestaltungsmöglichkeit zunächst die vorgebogenen Stege 330 auf, wodurch die Seitenflügel 101 der Gerüststruktur 120 anschließend stärker aufgestellt werden, als ohne eine solche Verstärkungsstruktur 300 mit vorgebogenem Steg 330 oder vorgebogenen Stegen 330.

Eine fünfte Ausgestaltungsmöglichkeit wird durch die untere Abbildung der Figur 18 verdeutlicht. In diesem Fall werden die Querstreben 123 (Querspanten) zwischen den biegeelastischen Flanken 121, 122 (Gurte) vorgebogen. Im Falle der Krafteinwirkung F in -x-Richtung geben zunächst die Querstreben 123 ihre Vorspannkraft ab und legen sich, wie im Zusammenhang mit Figur 11 beschrieben, an den biegeelastischen Flanken 121, 122 an, wonach die nicht vorgebogenen Querstreben 123 ebenfalls die autoreaktive Verstellbewegung der Gerüststruktur 120 in die Komfortposition ausführen, wobei der Verstellweg gegenüber einer Ausführung ohne vorgebogene Querstreben 123 vergrößert ist.

Eine sechste Ausgestaltungsmöglichkeit wird durch die beiden oberen Abbildungen der Figur 19 verdeutlicht. Die sechste Ausgestaltungsmöglichkeit besteht darin, dass als Verstärkungsstruktur 300 eine Viergelenk-Struktur 350 im Bodenbereich 122A der Gerüststruktur angeordnet wird. Bei dieser sechsten Ausgestaltungsmöglichkeit ergibt sich ebenfalls der vorteilhafte Effekt, dass unter Krafteinwirkung F in -x-Richtung der stumpfe Winkel des Seitenflügels 101, in die Viergelenk-Struktur 350 durchschlägt, wodurch der/die Seitenflügel 101 insgesamt stärker in die Komfortposition ausgestellt wird/werden.

Eine siebente Ausgestaltungsmöglichkeit ist in der dritten Abbildung von oben in Figur 19 dargestellt. Die Verstärkungsstruktur 300 wird bei dieser Ausgestaltungsmöglichkeit aus zwei Viergelenk-Strukturen 350 ausgebildet.

Schließlich wird in der unteren Abbildung der Figur 19 eine Verstärkungsstruktur 300 vorgeschlagen, die eine Kombination aus einer Rautenstruktur 310 und einer Viergelenk-Struktur ist. In der unteren Abbildung der Figur 19 wird deutlich, dass es bei der Krafteinwirkung F in -x-Richtung zu einem Eindringen der Rautenstruktur 310 in die Viergelenk-Struktur 350 kommt, wobei die Rautenstruktur 310, wie zu der Figur 17 beschrieben, seitlich ausweicht und gleichzeitig in die Viergelenk-Struktur 350 durchschlägt, wodurch der vorteilhafte Effekt der Verstärkung des Verstellweges durch Überlagerung der beschriebenen Wirkungen, die mittels der Rautenstruktur 310 und der Viergelenk-Struktur 350 bewirkt werden, hervorgerufen wird.

Die Figuren 15E und Figur 16D verdeutlichen ferner, dass die Kopfstütze 100 in einer ersten Ausgestaltung auf einer Kopfstützen-Schwenkachse Y gegenüber einer Rückenlehne gemäß den Pfeilen in den Figuren 15E und 16D schwenkbar angeordnet ist, so dass die Position der Kopfstütze 100 gegenüber der Rückenlehne und damit die Lage der Gerüststruktur 120 in Abhängigkeit der Rückenlehnenneigung manuell oder automatisch nachsteuerbar ist.

In einer anderen nicht dargestellten zweiten Ausgestaltung ist vorgesehen, dass die Gerüststruktur 120 gegenüber dem Halteelement 110A auf einer Gerüststruktur-Schwenkachse schwenkbar angeordnet ist, wobei die Position der Gerüststruktur 120 gegenüber dem Halteelement 110A und somit gegenüber der Rückenlehne ebenfalls in Abhängigkeit der Rückenlehnenneigung manuell oder automatisch nachsteuerbar ist. In beiden Ausgestaltungen wird in vorteilhafter Weise dafür gesorgt, dass die Gerüststruktur 120 stets in einer optimaleren Position zu der von der Rückenlehnenneigung abhängigen Kopfposition angeordnet ist. Das heißt, die Anlagefläche 126 wird ohne Auftreffen der Hinterseite des Kopfes K in Abhängigkeit der Rückenlehnenneigung in ihrer Ausrichtung verändert, so dass vor einem Auftreffen der Hinterseite des Kopfes K bereits für eine optimiertere Ausrichtung der Anlagefläche 126 der Kopfstütze 100 vorgesorgt ist.

### Bezugszeichenliste

- 100: Kopfstütze
- 101: Seitenflügel
- 110: Haltestruktur
- 110A: Halteelement
- 111: Kopfkasten
- 111A: Basisteil
- 111B: Zwischenteil
- 111C: Ausformung
- 120: Gerüststruktur
- 120V: Vorderseite
- 120R: Rückseite
- 121: biegeelastische Flanke
- 122: biegeelastische Flanke
- 122A: Bodenbereich
- 123: Querstreben
- 123A: Auskragung
- 124: elastische Verbindungsmittel
- 125: Schaumteil (Polsterelement)
- 125A: Eck-Schaumteil
- 125B: Rand-Schaumteil
- 125C: Mittel-Schaumteil
- 126: Anlageflächen des Kopfes
- 127: Bezug (kaschiert)
- 127A: erstes Bezugsteil
- 127B: zweites Bezugsteil
- 128: Spitze
- 129: Steg
- 130: Messpunkt
- 131: Polsterelement
- 140: Gleitebene
- 150: Dämpfungselement
- 160: Öffnung, Spalt
- 170: Fixierung
- 180: Umlegung
- 190: Schüsselung
- 200: Rückenlehne
- 210: mittlerer Bereich
- 220: äußerer Bereich
- 230: Abstand der Querstreben 123
- 240: Länge der Querstreben 123
- 250: Verstellweg
- 260: Aussteifung
- 300: Verstärkungsstruktur
- 310: Rautenstruktur
- 320: Hexaederstruktur
- 330: vorgespannte Strebe
- 340: vorgespannte Querstreben
- 350: Viergelenk-Struktur
- 400: Haltestange
- K: Kopf
- P: Auftreffpunkt
- A: Auftrefffläche
- F: Kraft
- +x: Richtung in der üblichen Fahrtrichtung eines Fahrzeuges
- -x: Richtung entgegen der üblichen Fahrtrichtung eines Fahrzeuges
- y: Richtung in der Horizontalen quer zur x-Richtung
- z: Richtung in der Vertikalen quer zur x-Richtung
- x1: Mittelachse
- I: Ausgangsposition
- II: Schlummer- oder Crashposition
- Y: Kopfstützen-Schwenkachse

## Patentansprüche

1. Kopfstütze (100) mit einer Grundstruktur, die zur Verstellung der Kopfstütze (100) und zur Aufnahme eines Kopfes (K) einer Person dient, wobei die Grundstruktur eine Haltestruktur (110) und mindestens eine Gerüststruktur (120) umfasst, wobei die Gerüststruktur (120) biegeelastische Flanken (121,122) und zwischen den Flanken (121, 122) liegende auslenkbare Querstreben (123) aufweist, die über elastische Verbindungsmittel (124) an den Flanken (121, 122) angeordnet sind, wodurch ein über eine biegeelastische Flanke (121) auf die Querstreben (123) der mindestens einen Gerüststruktur (120) wirkender Kraftimpuls, der aus einer Richtung (-x) auf eine Vorderseite (120V) der mindestens einen Gerüststruktur (120) wirkt, eine ausgleichende autoreaktive Verformung der mindestens einen Gerüststruktur (120) an einer anderen Stelle in entgegengesetzter Richtung (+x) bewirkt,
**dadurch gekennzeichnet, dass**
die mindestens eine Gerüststruktur (120) zur Ausbildung von Seitenflügeln (101) dient, die an einem Halteelement (110A) der Haltestruktur (110) angeordnet sind, wobei die Seitenflügel (101) aus einer Ausgangsposition in Fahrtrichtung (+x-Richtung) autoreaktiv in eine Komfortposition und zurück bringbar sind.

2. Kopfstütze (100) nach Anspruch 1, **dadurch gekennzeichnet, dass** eine in eine Richtung (-x) wirkende Kraft (F) den Kraftimpuls erzeugt, der über einen Kopf (K) einer Person unter Ausbildung eines Auftreffpunktes (P) des Kopfes (K) oder einer Auftrefffläche (A) des Kopfes (K) auf die Vorderseite (120V) der Gerüststruktur (120) übertragen wird, eine Verstellung der Kopfstütze (100) an einer anderen Stelle - in einer Horizontalen (y) quer zur Richtung (x) der wirkenden Kraft (F) - zumindest einseitig seitlich des Auftreffpunktes (P) beziehungsweise der Auftrefffläche (A) des Kraftimpulses in entgegengesetzter Richtung (+x) bewirkt.

3. Kopfstütze (100) nach Anspruch 1, **dadurch gekennzeichnet, dass** die biegeelastischen Flanken (121,122) der mindestens einen Gerüststruktur (120) in der Kopfstütze (100) in Querrichtung (y) in der Horizontalen quer zur Richtung (-x) der den Kraftimpuls bewirkenden Kraft (F) angeordnet sind.

4. Kopfstütze (100) nach Anspruch 1, **dadurch gekennzeichnet, dass** die Querstreben (123) der mindestens einen Gerüststruktur (120) in der Kopfstütze (100) im Wesentlichen in Hochrichtung (z) in der Vertikalen quer zur Richtung (-x) der den Kraftimpuls bewirkenden Kraft (F) angeordnet sind.

5. Kopfstütze (100) nach Anspruch 1, **dadurch gekennzeichnet, dass** die zweite biegeelastische Flanke (122) der mindestens einen Gerüststruktur (120) zumindest teilweise mit der Haltestruktur (110) verbunden ist.

6. Kopfstütze (100) nach Anspruch 1, **dadurch gekennzeichnet, dass** die mindestens eine Gerüststruktur (120) eine dreieckige oder eine rechteckige Form aufweist, wobei mehrere Gerüststrukturen (120) der gleichen Form oder unterschiedlicher Formen zu einer Mehrfach-Gerüststruktur zusammensetzbar sind.

7. Kopfstütze (100) nach Anspruch 1, **dadurch gekennzeichnet, dass** die mit der Haltestruktur (110) verbundene mindestens eine Gerüststruktur (120) der Kopfstütze (100) über mit der Haltestruktur (110) verbundene Haltestangen (400) als Einzel-Kopfstütze (100) auf einer Rückenlehne (200) angeordnet ist oder die mindestens eine Gerüststruktur (120) in eine Struktur einer Rückenlehne (200) integriert ist.

8. Kopfstütze (100) nach Anspruch 1, **dadurch gekennzeichnet, dass** auf der Vorderseite (120V) der Kopfstütze (100) auf der die Seitenflügel (101) bildenden Gerüststruktur (120) ein Polsterelement (131) angeordnet ist, wobei zwischen einer Rückseite des Polsterelementes (131) und einer Vorderseite der Gerüststruktur (120) der Seitenflügel (101) eine Gleitebene (140) ausgebildet wird, in der die einander zugewandten aneinander liegenden Flächen eine Reibpaarung mit einem geringen Reibungskoeffizienten bilden.

9. Kopfstütze (100) nach Anspruch 8, **dadurch gekennzeichnet, dass** die Gerüststruktur (120) der Seitenflügel (101) und das Polsterelement (131) als separates von der Kopfstütze (100) trennbares Finray-Polsterelement (120, 131) ausgebildet sind.

10. Kopfstütze (100) nach Anspruch 1, **dadurch gekennzeichnet, dass** die Haltestruktur (110) zur Aufnahme der Gerüststruktur (120) der Seitenflügel (101) eine wannenartige Ausformung (111C) aufweist.

11. Kopfstütze (100) nach Anspruch 1, **dadurch gekennzeichnet, dass** die zwischen den biegeelastischen Flanken (121, 122) liegenden auslenkbaren Querstreben (123) nahe der biegeelastischen Flanken (121, 122) Scharnierstellen beziehungsweise Gelenkstellen ausbilden, deren Elastizität durch eine vorgenommene Materialschwächung beeinflusst wird.

12. Kopfstütze (100) nach Anspruch 1, **dadurch gekennzeichnet, dass** die Gerüststruktur (120) der Seitenflügel (101) in ihrer Ausgangsposition eine Anlagefläche (126) für den Kopf (K) in einer "V-Stellung" bildet, indem die Seitenflügel (101) der Gerüststruktur (120) bereits in ihrer Ausgangsposition zumindest im unteren Bereich aus einer Ebene (z/y-Ebene) nach vorne (in +x-Richtung) zum Kopf (K) eines Aufsitzenden "schüsselartig" heraustreten.

13. Kopfstütze (100) nach Anspruch 1, **dadurch gekennzeichnet, dass** die Gerüststruktur (120) der Seitenflügel (101) in ihrer Ausgangsposition eine Anlagefläche (126) für den Kopf (K) in einer "V-Stellung" bildet, indem die Seitenflügel (101) die Gerüststruktur (120) in ihrer Ausgangsposition in einer Ebene (z/y-Ebene) liegen, jedoch zumindest im unteren Bereich der Seitenflügel (101) auf der Gerüststruktur (120) mindestens ein Schaumteil (125A) angeordnet ist, das nach vorne (in +x-Richtung) zum Kopf (K) eines Aufsitzenden "schüsselartig" heraustritt.

14. Kopfstütze (100) nach Anspruch 1, **dadurch gekennzeichnet, dass** ausgehend von einer axialsymmetrischen Mittelachse (x1) ein Abstand (230) und/oder eine Länge (240) der zwischen den biegeelastischen Flanken (121, 122) im normalen Einbauzustand der Kopfstütze (100) vertikal (z-Richtung) ausgerichteten Querstreben (123) von innen nach außen abnimmt.

15. Kopfstütze (100) nach Anspruch 1, **dadurch gekennzeichnet, dass** ein Bodenbereich (122A) der Gerüststruktur (120) der Seitenflügel (101) verstärkt ausgeführt ist und/oder eine Aussteifung (260) aufweist.

16. Kopfstütze (100) nach Anspruch 1, **dadurch gekennzeichnet, dass** auf der Gerüststruktur (120) je Seitenflügel (101) mindestens ein Eck-Schaumteil (125A) angeordnet ist, wodurch in einer Ausgangsposition, in der die Seitenflügel (101) in einer Ebene (z/y-Ebene) liegen, eine Schüsselung der Anlagefläche (126) des Kopfes (K) bewirkbar ist.

17. Kopfstütze (100) nach Anspruch 8, **dadurch gekennzeichnet, dass** auf der Gerüststruktur ein Polsterelement (131) angeordnet ist, welches ein mit einem Bezug (127, 127A) versehenes Schaumteil (125) ist.

18. Kopfstütze (100) nach Anspruch 8, **dadurch gekennzeichnet, dass** zwischen der Gerüststruktur (120) und dem Polsterelement (131) eine Gleitebene (140) ausgebildet ist, wobei die Gleitebene zwischen einer Rückseite des Polsterelementes (131) und einer Vorderseite (120V) der Gerüststruktur (120) der Seitenflügel (101) angeordnet ist, in der die einander zugewandten, aneinander liegenden Flächen der Rückseite des Polsterelementes (131) und der Vorderseite (120V) der Gerüststruktur (120) eine Reibpaarung mit einem geringen Reibungskoeffizienten bilden.

19. Kopfstütze (100) nach Anspruch 17, **dadurch gekennzeichnet, dass** das Schaumteil (125) ein Mittel-Schaumteil (125C) und je Seitenflügel (101) ein Rand-Schaumteil (125B) und/oder ein Eck-Schaumteil (125A) umfasst.

20. Kopfstütze (100) nach Anspruch 19, **dadurch gekennzeichnet, dass** das Mittel-Schaumteil (125C) aus einem weicheren Schaum und das Rand-Schaumteil (125B) und/oder das Eck-Schaumteil (125A) gegenüber dem weicheren Schaum aus einem härteren Schaum ausgebildet ist.

21. Kopfstütze (100) nach Anspruch 20, **dadurch gekennzeichnet, dass** das Mittel-Schaumteil (125C) aus einem weicheren viskoelastischen Schaum und das Rand-Schaumteil (125B) und/oder das Eck-Schaumteil (125A) gegenüber dem weicheren viskoelastischen Schaum aus einem härteren viskoelastischen Schaum ausgebildet ist.

22. Kopfstütze (100) nach Anspruch 1, **dadurch gekennzeichnet, dass** die als Gerüststruktur (120) ausgebildeten Seitenflügel (101) auf der Vorderseite (120V) der Gerüststruktur (120) eine im Bereich der Mittelachse (x1) liegende Öffnung (160) aufweist, in der ein von der Vorderseite (120V) zugängliches Dämpfungselement (150) angeordnet ist, welches ein Schaumteil, insbesondere in der Art eines Druckpilzes ist, wobei insbesondere ein viskoelastischer Schaum verwendet wird.

23. Kopfstütze (100) nach Anspruch 1, **dadurch gekennzeichnet, dass** die Gerüststruktur (120) der Seitenflügel (101) Verstärkungselemente (300; 310, 320, 330, 340, 350) aufweist, die einen Verstellweg der Seitenflügel (101) von der Ausgangsposition in die Komfortposition und zurück vergrößern.

24. Kopfstütze (100) nach Anspruch 1, **dadurch gekennzeichnet, dass** die Kopfstütze (100) auf einer Kopfstützen-Schwenkachse (Y) gegenüber einer Rückenlehne schwenkbar angeordnet ist, wobei die Position der Kopfstütze (100) gegenüber der Rückenlehne und damit die Lage der Gerüststruktur (120) in Abhängigkeit der Rückenlehnenneigung manuell oder automatisch nachsteuerbar ist.

25. Kopfstütze (100) nach Anspruch 1, **dadurch gekennzeichnet, dass** die Gerüststruktur (120) gegenüber dem Halteelement (110A) auf einer Gerüststruktur-Schwenkachse schwenkbar angeordnet ist, wobei die Position der Gerüststruktur (120) gegenüber dem Halteelement (110A) und somit gegenüber der Rückenlehne in Abhängigkeit der Rückenlehnenneigung manuell oder automatisch nachsteuerbar ist.

## Claims

1. A head restraint (100) with a basic structure used to adjust the head restraint (100) and receive a head (K) of a person, wherein the basic structure comprises a holding structure (110) and at least one framework structure (120), wherein the framework structure (120) has flexible flanks (121, 122) and deflectable crosspieces (123) lying between the flanks (121, 122) that are arranged on the flanks (121, 122) via elastic connecting means (124), whereby a force pulse acting on the crosspieces (123) of the at least one framework structure (120) via a flexible flank (121), which force pulse works from a direction (-x) to a front side (120V) of the at least one framework structure (120), causes a balancing autoreactive deformation of the at least one framework structure (120) at another place in the opposite direction (+x),
**characterized in that**
the at least one framework structure (120) is for forming side wings (101) that are arranged on a holding element (110A) of the holding structure (110), wherein the side wings (101) are conveyable from a starting position in the travel direction (+x direction) autoreactively to a comfort position and back.

2. The head restraint (100) according to claim 1, **characterized in that** a force (F) acting in one direction (-x) produces the force pulse that is transmitted via a head (K) of a person by forming an impact point (P) of the head (K) or an impact surface (A) of the head (K) onto the front side (120V) of the framework structure (120), causes an adjustment of the head restraint (100) at another place - in a horizontal (y) diagonally to the direction (x) of the acting force (F) - at least on one side to the side of the impact point (P) or of the impact surface (A) of the force pulse in an opposite direction (+x).

3. The head restraint (100) according to claim 1, **characterized in that** the flexible flanks (121, 122) of the at least one framework structure (120) in the head restraint (100) are arranged in a diagonal direction (y) in the horizontal diagonally to the direction (-x) of the force (F) causing the force pulse.

4. The head restraint (100) according to claim 1, **characterized in that** the crosspieces (123) of the at least one framework structure (120) are arranged in the head restraint (100) essentially in a vertical direction (z) in the vertical diagonally to the direction (-x) of the force (F) causing the force pulse.

5. The head restraint (100) according to claim 1, **characterized in that** the second flexible flank (122) of the at least one framework structure (120) is connected at least partially to the holding structure (110) .

6. The head restraint (100) according to claim 1, **characterized in that** the at least one framework structure (120) has a triangular or rectangular shape, wherein several framework structures (120) of the same shape or different shapes are composable into a multiple framework structure.

7. The head restraint (100) according to claim 1, **characterized in that** the at least one framework structure (120) connected to the holding structure (110) of the head restraint (100) via support sticks (400) connected to the holding structure (110) is arranged as a single head restraint (100) on a backrest (200) or the at least one framework structure (120) is integrated into a structure of a backrest (200) .

8. The head restraint (100) according to claim 1, **characterized in that** on the front side (120V) of the head restraint (100) on the framework structure (120) forming the side wings (101) a cushion element (131) is arranged, wherein between a back side of the cushion element (131) and a front side of the framework structure (120) of the side wings (101) a sliding plane (140) is formed in which the surfaces facing one another lying against one another form a friction pairing with a low friction coefficient.

9. The head restraint (100) according to claim 8, **characterized in that** the framework structure (120) of the side wings (101) and the cushion element (131) are formed as a separate Finray cushion element (120, 131) that is separable from the head restraint (100).

10. The head restraint (100) according to claim 1, **characterized in that** the holding structure (110) has a tub-shaped configuration (111C) to receive the framework structure (120) of the side wings (101).

11. The head restraint (100) according to claim 1, **characterized in that** the deflectable crosspieces (123) lying between the flexible flanks (121, 122) form hinge points or link points near the flexible flanks (121, 122), the elasticity of which is influenced by material weakening that is carried out.

12. The head restraint (100) according to claim 1, **characterized in that** the framework structure (120) of the side wings (101) in its starting position forms a contact surface (126) for the head (K) in a "V position", the side wings (101) of the framework structure (120) already in their starting position at least in the lower area protruding from a plane (z/y plane) forwards (in +x direction) to the head (K) of a sitter "in a dished manner".

13. The head restraint (100) according to claim 1, **characterized in that** the framework structure (120) of the side wings (101) in its starting position forms a contact surface (126) for the head (K) in a "V-position", the side wings (101) the framework structure (120) in their starting position lying in a plane (z/y plane), but at least in the lower area of the side wings (101) on the framework structure (120) at least one foam part (125A) is arranged that protrudes forwards (in +x direction) to the head (K) of a sitter "in a dished manner".

14. The head restraint (100) according to claim 1, **characterized in that** starting from an axially symmetric central axis (x1) a distance (230) and/or a length (240) of the crosspieces (123) oriented vertically (z-direction) between the flexible flanks (121, 122) decreases from the interior to the exterior in the normal mounted condition of the head restraint (100) .

15. The head restraint (100) according to claim 1, **characterized in that** a floor area (122A) of the framework structure (120) of the side wings (101) has a reinforced design and/or a stiffening (260).

16. The head restraint (100) according to claim 1, **characterized in that** on the framework structure (120) at least one corner foam part (125A) is arranged per side wing (101), whereby, in a starting position, in which the side wings (101) lie on a plane (z/y plane), dishing of the contact surface (126) of the head (K) is achievable.

17. The head restraint (100) according to claim 8, **characterized in that** on the framework structure a cushion element (131) is arranged, which is a foam part (125) provided with a cover (127,127A).

18. The head restraint (100) according to claim 8, **characterized in that** between the framework structure (120) and the cushion element (131) a sliding plane (140) is formed, wherein the sliding plane is arranged between a back side of the cushion element (131) and a front side (120V) of the framework structure (120) of the side wings (101), wherein the surfaces facing and adjacent to one another of the back side of the cushion element (131) and of the front side (120V) of the framework structure (120) form a friction pairing with a low friction coefficient.

19. The head restraint (100) according to claim 17, **characterized in that** the foam part (125) comprises a central foam part (125C) and an edge foam part (125B) and/or a corner foam part (125A) per side wing (101).

20. The head restraint (100) according to claim 19, **characterized in that** the central foam part (125C) is made from a softer foam and the edge foam part (125B) and/or the corner foam part (125A) is formed by a harder foam compared to the softer foam.

21. The head restraint (100) according to claim 20, **characterized in that** the central foam part (125C) is formed from a softer viscoelastic foam and the edge foam part (125B) and/or the corner foam part (125A) are formed from a viscoelastic foam that is harder in relation to the softer viscoelastic foam.

22. The head restraint (100) according to claim 1, **characterized in that** the side wings (101) formed as a framework structure (120) on the front side (120V) of the framework structure (120) has an opening (160) lying in the area of the central axis (x1), in which a cushioning element (150) that is accessible from the front side (120V) is arranged, which is a foam part, particularly in the pressure element type, wherein in particular a viscoelastic foam is used.

23. The head restraint (100) according to claim 1, **characterized in that** the framework structure (120) of the side wings (101) has reinforcing elements (300; 310, 320, 330, 340, 350) that enlarge an adjustment path of the side wings (101) from the starting position to the comfort position and back.

24. The head restraint (100) according to claim 1, **characterized in that** the head restraint (100) is arranged swivel-mounted on a head restraint swivel axis (Y) opposite a backrest, wherein the position of the head restraint (100) in relation to the backrest and thus the position of the framework structure (120) is readjustable manually or automatically according to the tilt of the backrest.

25. The head restraint (100) according to claim 1, **characterized in that** the framework structure (100) is arranged swivel-mounted on a framework structure-swivel axis in relation to the holding element (110A), wherein the position of the framework structure (120) in relation to the holding element (110A) and thus in relation to the backrest is readjustable manually or automatically according to the tilt of the backrest.

## Revendications

1. Appui-tête (100) comportant une structure de base servant à ajuster l'appui-tête (100) et à recevoir la tête d'une personne (K), la structure de base comprenant une structure de retenue (110) et au moins une structure d'armature (120), la structure d'armature (120) comportant des flancs élastiques en flexion (121, 122) et des barres transversales (123) reposant entre les flancs (121, 122) et pouvant être déviées, qui sont agencées par l'intermédiaire des moyens élastiques de liaison (124) sur les flancs (121, 122), une impulsion de force agissant sur les barres transversales (123) de l'au moins une structure d'armature (120) par l'intermédiaire d'un flanc élastique en flexion (121) et agissant à partir d'une direction (-x) sur une face avant (120V) de l'au moins une structure d'armature (120) provoquant ainsi une déformation autoréactive compensatrice de l'au moins une structure d'armature (120) en un autre point dans la direction inverse (+x),
**caractérisé par le fait que**
l'au moins une structure d'armature (120) sert à former des ailes latérales (101), qui sont agencées sur un élément de retenue (110A) de la structure de retenue (110), les ailes latérales (101) à partir d'une position de départ dans la direction de déplacement (direction +x) pouvant être amenés et ramenés dans une position de confort.

2. Appui-tête (100) selon la revendication 1, **caractérisé en ce qu'**une force (F) agissant dans une direction (-x) génère l'impulsion de force qui est transmise par l'intermédiaire d'une tête (K) d'une personne vers la face avant (120V) de la structure d'armature (120) en formant un point d'impact (P) de la tête (K) ou une surface d'impact (A) de la tête (K), provoque un réglage de l'appui-tête (100) en un autre point - dans une horizontale (y) transversale à la direction (x) de la force agissant (F) - au moins d'un côté latéralement par rapport au point d'impact (P) ou à la surface d'impact (A) de l'impulsion de force dans la direction opposée (+x).

3. Appui-tête (100) selon la revendication 1, **caractérisé en ce que** les flancs élastiques en flexion (121, 122) de l'au moins une structure d'armature (120) dans l'appui-tête (100) sont agencés dans la direction transversale (y) dans l'horizontale transversale à la direction (-x) de la force (F) provoquant l'impulsion de force.

4. Appui-tête (100) selon la revendication 1, **caractérisé en ce que** les barres transversales (123) de l'au moins une structure d'armature (120) dans l'appui-tête (100) sont agencés substantiellement dans la direction verticale (z) dans la verticale transversale à la direction (-x) de la force (F) provoquant l'impulsion de force.

5. Appui-tête (100) selon la revendication 1, **caractérisé en ce que** le second flanc élastique en flexion (122) de l'au moins une structure d'armature (120) est au moins partiellement relié à la structure de retenue (110).

6. Appui-tête (100) selon la revendication 1, **caractérisé en ce que** l'au moins une structure d'armature (120) a une forme triangulaire ou rectangulaire, une pluralité de structures d'armature (120) de même forme ou de formes différentes pouvant être composées ensemble pour former une structure d'armature multiple.

7. Appui-tête (100) selon la revendication 1, **caractérisé en ce que** l'au moins une structure d'armature (120) de l'appui-tête (100) reliée à la structure de retenue (110) est agencée en tant qu'appui-tête individuel (100) sur un dossier (200) par l'intermédiaire des tiges de retenue (400) reliées à la structure de retenue (110), ou l'au moins une structure d'armature (120) est intégrée dans une structure d'un dossier (200).

8. Appui-tête (100) selon la revendication 1, **caractérisé en ce qu'**un élément de rembourrage (131) est agencé sur la face avant (120V) de l'appui-tête (100) sur la structure d'armature (120) formant les ailes latérales (101), un plan de glissement (140) étant formé entre une face arrière de l'élément de rembourrage (131) et une face avant de la structure d'armature (120) des ailes latérales (101), dans lequel les surfaces se faisant face et aboutées forment un accouplement à friction avec un faible coefficient de friction.

9. Appui-tête (100) selon la revendication 8, **caractérisé en ce que** la structure d'armature (120) des ailes latérales (101) et l'élément de rembourrage (131) sont formés comme un élément séparé de rembourrage Finray (120, 131) séparable de l'appui-tête (100).

10. Appui-tête (100) selon la revendication 1, **caractérisé en ce que** la structure de retenue (110) destinée à recevoir la structure d'armature (120) des ailes latérales (101) présente une formation en forme de bac (111C).

11. Appui-tête (100) selon la revendication 1, **caractérisé en ce que** les barres transversales (123) pouvant être déviées reposant entre les flancs élastiques en flexion (121, 122) forment des points de charnière ou des points d'articulation près des flancs élastiques en flexion (121, 122), dont l'élasticité est influencée par un affaiblissement du matériel effectué.

12. Appui-tête (100) selon la revendication 1, **caractérisé en ce que** la structure d'armature (120) des ailes latérales (101) forme dans sa position de départ une surface de contact (126) pour la tête (K) dans une "position en V", **en ce que** les ailes latérales (101) de la structure d'armature (120) déjà dans leur position de départ, au moins dans la zone inférieure, émergent d'un plan (plan z/y) en avant (direction +x) vers la tête (K) d'une personne assise "comme une cuvette".

13. Appui-tête (100) selon la revendication 1, **caractérisé en ce que** la structure d'armature (120) des ailes latérales (101) forme dans sa position de départ une surface de contact (126) pour la tête (K) dans une "position en V", les ailes latérales (101) la structure d'armature (120) reposant dans leur position de départ dans un plan (plan z/y), mais au moins dans la zone inférieure des ailes latérales (101) au moins une partie en mousse (125A) est agencée sur la structure d'armature (120) qui dépasse vers l'avant (dans la direction +x) vers la tête (K) d'une personne assise "comme une cuvette".

14. Appui-tête (100) selon la revendication 1, **caractérisé en ce que**, à partir d'un axe central (x1) symétrique axialement, une distance (230) et/ou une longueur (240) des barres transversales (123) alignées verticalement (direction z) entre les flancs élastiques en flexion (121, 122) dans l'état de montage normal de l'appui-tête (100) diminue de l'intérieur vers l'extérieur.

15. Appui-tête (100) selon la revendication 1, **caractérisé en ce qu'**une zone inférieure (122A) de la structure d'armature (120) des ailes latérales (101) est réalisée de façon renforcée et/ou comporte un raidisseur (260).

16. Appui-tête (100) selon la revendication 1, **caractérisé en ce qu'**au moins une partie de coin en mousse (125A) par aile latérale (101) est agencée sur la structure d'armature (120), dans une position de départ, dans laquelle les ailes latérales (101) reposent dans un plan (plan z/y), une courbure de la surface de contact (126) de la tête (K) pouvant ainsi être provoquée.

17. Appui-tête (100) selon la revendication 8, **caractérisé en ce que** sur la structure d'armature est agencé un élément de rembourrage (131) étant une partie en mousse (125) pourvue d'une couverture (127, 127A).

18. Appui-tête (100) selon la revendication 8, **caractérisé en ce qu'**un plan de glissement (140) est formé entre la structure d'armature (120) et l'élément de rembourrage (131), le plan de glissement étant agencé entre une face arrière de l'élément de rembourrage (131) et une face avant (120V) de la structure d'armature (120) des ailes latérales (101), dans lequel les surfaces se faisant face et aboutées de la face arrière de l'élément de rembourrage (131) et de la face avant (120V) de la structure d'armature (120) forment un accouplement à friction avec un faible coefficient de friction.

19. Appui-tête (100) selon la revendication 17, **caractérisé en ce que** la partie en mousse (125) comprend une partie centrale en mousse (125C) et chaque aile latérale (101) une partie de bord en mousse (125B) et/ou une partie de coin en mousse (125A).

20. Appui-tête (100) selon la revendication 19, **caractérisé en ce que** la partie centrale en mousse (125C) est formée à partir d'une mousse plus souple et la partie de bord en mousse (125B) et/ou la partie de coin en mousse (125A) est formée d'une mousse plus dure que la mousse plus souple.

21. Appui-tête (100) selon la revendication 20, **caractérisé en ce que** la partie centrale en mousse (125C) est formée à partir d'une mousse viscoélastique plus souple et la partie de bord en mousse (125B) et/ou la partie de coin en mousse (125A) est formée d'une mousse viscoélastique plus dure que la mousse viscoélastique plus souple.

22. Appui-tête (100) selon la revendication 1, **caractérisé en ce que** les ailes latérales (101) réalisées sous la forme de structure d'armature (120) présentent sur la face avant (120V) de la structure d'armature (120) une ouverture (160) reposant dans la zone de l'axe central (x1), dans laquelle est agencé un élément amortisseur (150) qui est accessible de la face avant (120V) et qui constitue une partie en mousse, notamment en forme d'un élément à pression, notamment une mousse viscoélastique étant utilisée.

23. Appui-tête (100) selon la revendication 1, **caractérisé en ce que** la structure d'armature (120) des ailes latérales (101) comprend des éléments de renforcement (300 ; 310, 320, 330, 340, 350) qui augmentent une trajectoire de réglage des ailes latérales (101) de la position de départ à la position de confort et retour.

24. Appui-tête (100) selon la revendication 1, **caractérisé en ce que** l'appui-tête (100) est agencé sur un axe de pivotement de l'appui-tête (Y) de manière à pouvoir pivoter par rapport à un dossier, la position de l'appui-tête (100) par rapport au dossier et donc la position de la structure d'armature (120) étant réajustable manuellement ou automatiquement en fonction de l'inclinaison du dossier.

25. Appui-tête (100) selon la revendication 1, **caractérisé en ce que** la structure d'armature (120) est agencée sur un axe de pivotement de la structure d'armature de manière à pouvoir pivoter par rapport à l'élément de retenue (110A), la position de la structure d'armature (120) par rapport à l'élément de retenue (110A) et donc par rapport au dossier étant réajustable manuellement ou automatiquement selon l'inclinaison du dossier.
